(19) Europäisches Patentamt
European Patent Office
Office européen des brevets

(11) EP 0 372 907 B1

(12) EUROPEAN PATENT SPECIFICATION

(45) Date of publication and mention
of the grant of the patent:
**17.06.1998 Bulletin 1998/25**

(51) Int Cl.6: **H01S 3/06**, H01S 3/094

(21) Application number: **89312666.4**

(22) Date of filing: **05.12.1989**

(54) **Superfluorescent broadband fiber laser source**

Breitbandige Superfluoreszenz-Faserlaserquelle

Source laser superfluorescente à fibre à bande large

(84) Designated Contracting States:
**DE FR GB IT**

(30) Priority: **07.12.1988 US 281088**

(43) Date of publication of application:
**13.06.1990 Bulletin 1990/24**

(60) Divisional application: **97111612.4 / 0 817 335**

(73) Proprietor: **THE BOARD OF TRUSTEES OF THE LELAND STANFORD JUNIOR UNIVERSITY Stanford California 94305 (US)**

(72) Inventors:
• **Digonnet, Michel J. F.**
  **Palo Alto California 94306 (US)**
• **Liu, Karen**
  **Lawrenceville New Jersey 08648 (US)**
• **Kim, Byoung Y.**
  **Menlo Park California 94025 (US)**
• **Shaw, Herbert J.**
  **Stanford California 94305 (US)**
• **Fling, John J.**
  **Gaviota California 93117 (US)**

(74) Representative: **Rushton, Ronald et al Sommerville & Rushton, 45 Grosvenor Road St. Albans, Herts AL1 3AW (GB)**

(56) References cited:
**EP-A- 0 143 561          EP-A- 0 179 320**

• **ELECTRONICS LETTERS, vol. 23, no. 24, 19th November 1987, pages 1320-1321; K.LIU et al.: "10mW superfluorescent single-mode fibre source at 1060 nm"**

## Description

### Field of the Invention

The present invention relates generally to fiber optic devices, and more specifically to superfluorescent fiber laser sources for emitting broadband light signals having a low temporal coherence.

### Background of the Invention

The advent of optical devices using low temporal coherence light signals such as optical gyroscopes, optical processors, has created a need for broadband light sources having a relatively high output and emitting relatively incoherent light signals. In a gyroscope for example, an optical fiber, typically a kilometer or more in length, is wound into a loop and a light signal is recirculated within the loop in both directions. Motion of the loop causes a phase difference between the counterpropagating light signals in accordance with the well-known "Sagnac" effect. This phase difference is then used to measure the gyroscopic rotation. According to the "Sagnac" effect, a rotation of the loop increases the effective path length of one of the counterpropagating light signals. A relative path length difference therefore results in the emerging light signals after circulation through the loop of the two counterpropagating light signals. This path difference is measured by a detector as a phase difference, which is thus indicative of the angular rate of rotation to which the gyroscopic system is subjected. It is desirable that the light signals injected into the loop have a low temporal coherence so as to avoid interference effects from Rayleigh back scattering. As the phase shift induced by rotation is relatively small, any interference effects may indeed substantially alter the phase difference measured by the detector and provide a false measurement of the actual rate of rotation of the loop. Disparity between theoretical predictions and actual results has also been attributed to other non-rotationally induced phase differences such as those associated with residual fiber birefringence. It has also been shown that the use of a broadband light source having low temporal coherence compensates for the Kerr effect. A disclosure of this discovery can be found in PCT Patent Application Serial No. 82/01542 filed on November 1, 1982 and assigned to the assignee of this present application.

A broadband incoherent light source having a lower temporal coherence than laser sources but having a spatial coherence higher than regular thermal incoherent light source is therefore advantageous for introducing light into an optical device such as a gyroscope. Furthermore, it is preferable that these light sources be small and compact and have a low energy consumption.

Light-emitting diodes (LED's) have generally been used for launching light into an optical fiber. A LED emits light under application of current flowing therethrough. The light comes from photons of energy caused by hole-electron combinations. The diode is forward-biased from an external source. Details on the structure of LEDs used for launching a light signal into an optical fiber can be found in: Fiber Optics by Robert G. Seippel, Reston Publishing Company, Inc., Reston, Virginia, pp. 107-116. While a LED emits light that is essentially incoherent and therefore suitable for application in a gyroscope, the output of the light signal emitted by a LED is generally insufficient in intensity and makes difficult the detection of very low rotation rates. Furthermore, the spectrum of wavelengths of the light emitted by a LED is substantially temperature dependent, an undesirable effect for many optical fiber applications such as gyroscopes. Finally, the coupling of a LED to an optical fiber gyroscope is typically of a poor quality.

Superradiant LEDs have also been used to obviate the problem raised by the low energy output of regular LEDs. Although a superradiant LED represents a progress over ordinary LEDs, the light signal coupled into an optical fiber, preferably a single-mode optical fiber, from a superradiant LED is low. Moreover, the temporal coherence of a superradiant LED is not as low as with a regular LED. Furthermore, because the light emitted by superradiant LEDs is the result of band transitions, it is more susceptible to temperature dependence and therefore lacks the stability required for use in gyroscopes and other optical systems.

Semiconductor laser diodes such as Ga(Al)As diode lasers operating continuously at room temperature in the near infrared region emit high output light very suitable for use as light sources in optical systems. However, the temporal coherence of the light emitted by a semiconductor laser diode is typically very high and can cause undesirable effects in an optical system requiring low temporal light such as a gyroscope.

Other miniature broadband optical sources used so far in fiber optic gyroscopes are superluminescent diodes (SLDs). However, SLDs generally fail to satisfy the wavelength stability requirement, as their emission wavelength is very sensitive to temperature (300 ppm/°C) and optical feedback. In addition, they incur high coupling loss into single-mode fiber, yielding typically only a few mW of usable power. Commercially available superluminescent diodes also exhibit a short lifetime. Moreover, coupling to a single-mode fiber is hindered by the poor spatial coherence of superluminescent diodes. Consequently, none of the non-fiber light sources hereabove described can be considered optimal light sources for use in gyroscopes and other optical devices as they all fail the requirements regarding temperature sensitivity and wavelength stability.

An alternate possibility is the use of high gain fibers optically pumped to a sufficiently high level to generate a significant superfluorescent output via Amplified Spontaneous Emission (ASE) also referred to as superluminescence. Single-mode glass fibers doped with an active ion are good candidates for superfluorescence sources as demonstrated by the high optical gains that they can provide. High gain materials such as Nd:YAG in a fiber form are particularly advantageous in a doped fiber configuration. Doped glass fibers present, however, the desirable advantage of emitting light with a broader spectral range. Recent improvements in the nature of the host material used in doped fibers have allowed superfluorescence to occur in doped fibers without having to resort to high pumping light intensities. A theoretical analysis of ASE in doped fibers is disclosed in an article by Michael Digonnet: "Theory of Superfluorescent Fiber Lasers," Journal of Lightwave Technology, Vol. LT-4, No. 11, November 1986. This article is hereby incorporated by reference. An experimental device comprising doped fibers emitting light by ASE was also disclosed in the following two articles: "Superfluorescent Single Mode Nd:Fiber Source at 1060 nm," K. Liu, et al., Electronics Letter, Vol. 23, No. 24, November 1987, and in "Neodymium Fiber Laser at 0.905, 1.06 and 1.3 microns," Po, et al., Optical Society of America Annual Meeting, Seattle, Washington, October 1986. Both of these articles are hereby incorporated by reference.

Additionally, a light source was disclosed in U.S. Patent No. 4,637,025 to Snitzer, et al., and EP-A-179320 which disclose the physical phenomenon of Amplified Spontaneous Emission. This patent is hereby incorporated by reference. The light source described in the aforementioned patent comprises a pump source coupled to a fiber doped with an active laser material. The light emitted by the pump into the optical fiber has an intensity sufficient to produce Amplified Spontaneous Emission in the doped fiber. The resulting emission exits at the one end of the doped fiber which is not coupled to the pump source. In an alternative embodiment disclosed in the aforementioned patent, the backward component of the resulting ASE laser emission is reflected onto a dichroic mirror located between the pumping source and the doped fiber and combined to the forward component.

Although the superradiant light source disclosed by Snitzer is an improvement over light sources heretofore used in gyroscopes, it has several disadvantages that are obviated by the light source of the present invention. In the ASE laser source disclosed by Snitzer, the resulting light signal has at least the same temperature dependence as the ASE source wherefrom it is emitted. As the temperature dependence of an ASE laser source may be relatively high for certain applications, the temperature dependence of the resulting ASE laser source disclosed by Snitzer may not be acceptable for certain applications. Furthermore, in the first embodiment disclosed in the Snitzer patent, the light emitted by the pump source is launched directly into the doped fiber. The forward component traverses the doped fiber once and is therefore amplified by a factor $e^G$, G being the gain of the doped fiber. The backward component of the ASE light signal is fed back into the pump, thereby inducing resonance in the pump cavity and may alter the output of the pump source. In the second embodiment disclosed by Snitzer, a dichroic mirror is used which reflects the ASE signal. A dielectric mirror such as a dichroic mirror is typically formed of multiple dielectric layers stacked on the top of one another. These dielectric layers necessarily reflect a portion of the light impinging upon the surface of those layers and thus reflect some of the pumping illumination emitted by the source back thereto, thereby creating feedback in the cavity of the pumping source. This optical feedback reduces the power of the pump source and also produces fluctuations in the superfluorescence output power. Moreover, the pump light signal is launched through the reflector, which decreases the coupling efficiency of the pump source. Furthermore, a reflector necessarily allows some portion of light to be transmitted even when it is designed to reflect light at a particular wavelength. The interposition of a mirror between the pump source and the doped fiber reduces the feedback induced by the backward component into the cavity of the pump source but by no means eliminates such feedback.

The coupling between the pump source and the doped fiber in the Snitzer embodiments has other disadvantages that are all circumvented in the devices disclosed in the present application. In particular, the pump source in the Snitzer device is coupled to the doped fiber using a longitudinal, parabolic index, self-locating fiber lens or a transverse fiber lens or simply a spherical end on the core of the doped fiber. Optical coupling elements such as lenses or mirrors do not have a very good coupling efficiency. Whenever it is possible, coupling methods employing optical fibers only have been preferred. Endtapering of an optic fiber to be coupled to a pumping source, in particular, substantially increases the coupling efficiency between the pumping source and the optical fiber. This entails, however, that the optical elements to be coupled be made essentially of optical fibers. The coupling optics used in the Snitzer device, however, does not use optical fibers. The Snitzer device does not use the excellent coupling properties of optical fibers and is not even designed to be able to use them.

Certain coupling methods, employed in the context of introducing pumping light into an optical fiber doped with a lasing medium, are described in European Patent Application No. 0143561, filed 2 November 1984. This document describes a fiber optical amplifier which utilises a ND:YAG crystal placed in series with an optical wavelength-division multiplexer. The multiplexer simultaneously and efficiently couples both pumping radiation and the signal to be amplied on to the fiber containing the crystal.

Thus, there is a need for a light source that emits light having low temporal coherence, high intensity, high spatial coherence, low temperature dependence and well adapted for use in fiber optic devices.

Summary of the Invention

According to the present invention, in a first aspect, there is disclosed a fiber optic system as defined in Claim 1.

In one preferred embodiment of the present invention, the coupler preferably provides substantially full coupling of the pumping light at the first spectrum of wavelengths and substantially inhibits coupling of the laser light at the second spectrum of wavelengths.

In another preferred embodiment of the present invention, the coupler provides substantially full coupling of the laser light at the second spectrum of wavelengths and substantially inhibits coupling of the pumping light at the first spectrum of wavelengths.

The coupler may also provide substantially 50% coupling of the laser light at the second spectrum of wavelengths and substantially inhibits coupling of the pumping light at the first spectrum of wavelengths.

The reflector is advantageously coupled to a second end of the doped fiber, the laser light exiting the doped fiber via the first end of the doped fiber.

In such an embodiment, the laser light typically exits the doped fiber via the coupler at another port of the coupler.

In another preferred embodiment of the present invention, the coupler may have a third and a fourth port, and the reflector may comprise an optical fiber forming a loop between the third and fourth ports.

Ideally, the doped fiber is a single-mode fiber doped with the laser material. The coupling of light in the coupler is typically due to evanescent field coupling. The first spectrum of wavelengths essentially comprises the wavelength at 806 nm, whereas the second spectrum of wavelengths essentially comprises the wavelength at 1060 nm. The laser material preferably comprises a rare earth ion, whereas the doped optical fiber is preferably made of a host glass selected from the group essentially consisting of alkali, alkaline earth silicates, silicates, germinates, phosphates or borate glasses. The rare earth material is preferably neodymium, ytterbium, erbium.

In the preferred embodiments of the present invention, the doped fiber is either fused or spliced to an optical fiber for coupling with the second port of the coupler. The reflector is preferably a dielectric mirror but may also comprise a metallic mirror. As to the source, it is preferably a laser diode or a dye laser.

According to the present invention in a second aspect, there is disclosed a fiber optic system as defined in Claim 21.

The present invention also consists in a method of producing light having low temporal coherence, as defined in Claim 28.

According to another aspect of the present invention, there is provided a method of producing light having low temporal coherence and a low temperature dependence as defined in Claim 30.

These and other advantages of the present invention are best understood through reference to the following description of preferred embodiments with reference to the drawings, in which:

Figures 1a and 1b are simplified energy level diagrams of a four-level doped fiber using a doped material such as Nd:YAG;

Figure 2 is a diagram showing the absorption spectrum of Nd:YAG at 300 K;

Figure 3 is a schematic diagram showing the first preferred embodiment of the present invention;

Figure 4 is a cross-sectional view of the fiber optic coupler preferably used as a multiplexer in the present invention, showing a pair of fiber optic strands mounted in respective arcuate grooves with a given radius of curvature, mechanically polished and positioned to provide coupling between the two fiber optic strands;

Figure 5 is a diagram showing the relative coupled power versus signal wavelength for a fiber coupler, such as the coupler illustrated in Figure 4, for selected values of the minimum fiber spacing and of the offset and for a fiber radius of curvature of 25 cm;

Figure 6 is a diagram of relative coupled power versus signal wavelength similar to Figure 5 for a fiber coupler having a fiber radius of curvature of 200 cm;

Figure 7 is a diagram of relative coupled power versus signal wavelength for a fiber coupler having a minimum fiber spacing of 4 microns, a fiber radius of 200 cm and a different value of the fiber offset;

Figure 8 is a diagram showing the output of the superluminescent source of the present invention versus the input pump power;

Figure 9 is a diagram showing the full width at half maximum of the superluminescent source spectrum of the present invention as a function of the output power with a pump wavelength at 825 nm;

Figure 10 is the spectrum of the 1060 nm line of the superluminescent source of the present invention with total power of 4.8 mW for a pump wavelength at 825 nm;

Figures 11a, 11b and 11c show the evolution of the gain factor and the total fluorescent power along the length of a lossless single-mode superfluorescent doped fiber used in the preferred embodiment of the present invention;

Figure 12 is a schematic diagram showing a second preferred embodiment of the present invention;

Figures 13a and 13b are diagrams respectively showing the temperature dependence of the filter function of the coupler used in the preferred embodiments of the present invention and the temperature dependence of a fiber source spectrum in accordance with the present invention;

Figure 14 is a diagram showing the net improvement in temperature stability of the average spectrum wavelength of the fiber source of the present invention as a function of the temperature dependence of the coupler used in connection with the fiber source of the present invention;

Figure 15 is a diagram showing the stability as a function of the ratio of the full width at half maximum of the filter over the full width at half maximum of the fiber source, and the transmitted power as the function of this ratio;

Figure 16 is a schematic diagram illustrating a third embodiment of the present invention;

Figure 17 is a schematic diagram of a fourth embodiment of the present invention;

Figure 18 is a fifth embodiment of the present invention incorporating an all-fiber reflector;

Figures 19 and 20 are schematic block diagrams illustrating fifth and sixth embodiments of the present invention utilizing a filter.

## Detailed Description of the Preferred Embodiments

The preferred embodiments of the present invention are based on a physical phenomenon referred to as "superfluorescence" or "amplified spontaneous emission." This phenomenon plays an important role in the preferred embodiments of the present invention and a discussion of superfluorescence is presented hereinbelow.

## Superfluorescence: Theoretical Background

Superfluorescence was generally regarded by laser experimenters and designers as a parasitic effect which would interfere with the signal amplification occurring in a laser cavity. In particular, superfluorescence played a highly undesirable role in numerous large high-gain laser systems as will be described below.

It is well known to place a pumping light source and a lasing material in a tubular cavity, such that the light source emits light at wavelengths corresponding to the absorption spectra of the lasing material. The ions, molecules or atoms of the laser material are then inverted to an energy level above the upper lasing level. After inversion, an initial relaxation of the molecules, ions or atoms of the lasing material through phonon radiation yields an ion, molecule or atom population at the upper lasing level. From this level, the ions, molecules or atoms will relax to a lower lasing level, emitting light at a wavelength which is characteristic of the lasing material. It is preferable that the lower lasing level be above the ground level so that a rapid, phonon-emitting relaxation occurs between the lower lasing level and the ground level, enabling a high inversion rate to exist between the upper and lower lasing levels within the pumped ions, molecules or atoms.

With the population so inverted, as is well known from laser technology, the lasing material provides a very slow fluorescence, that is, random emission of incoherent light. In the case of a Nd:YAG crystal, the average lifetime of the neodymium ions in the inverted state is 230 picoseconds. The energy represented by the population inversion can therefore be extracted as broadband radiation and can be quite intense. This phenomenon is generally known as amplified spontaneous emission (ASE) or also superfluorescence. Despite some dissensions among purists with respect to the use of those terms, ASE and superfluorescence will hereinafter be used interchangeably. In an optical amplifier, ASE limits the amount of gain and is an undesirable effect. In conventional amplifier systems, ASE originating from any point in the lasing material can impair the integrity of the laser pulse itself and substantially drain stored energy from the lasing medium. ASE can also reduce the effective stored energy in an amplifier system by parasitic mode generation in individual amplifier units and in combination with certain optical elements within the optical system. Theoretical calculations show that if certain conditions hold, ASE extracts the energy from the inversion as fast as the pumping source can create it. Amplified spontaneous emission is regarded as a serious problem in high-gain laser systems, possibly leading to damages of optical components of the laser system. Technical details relating to the problems caused by ASE and describing this phenomenon can be found in the following references: Laser Electronics, John T. Verdeyen, Prentice-Hall, pp. 179-183, and in Lasers by Siegman, University Science Books, pp. 555-556.

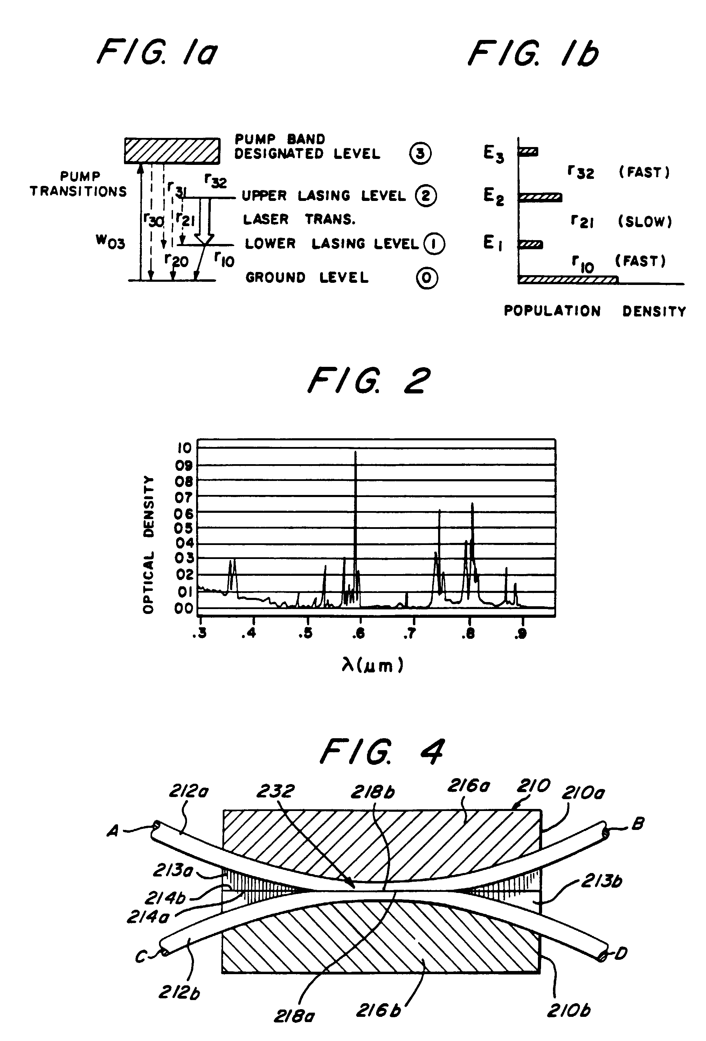

Figure 1a illustrates the different energy levels involved in spontaneous and stimulated emissions for the Nd:YAG crystal. It will be understood that when pump light at the absorption wavelength of the crystal is absorbed by the Nd:YAG crystal, the neodymium ions are excited from the ground state to the pump band. From the pump band, the ions quickly relax, through phonon interactions, to the upper lasing level. From this upper lasing level, the neodymium ions will undergo a relatively slow fluorescence to the lower lasing level. From this latter level, a final rapid phonon relaxation occurs to the ground state. This latter rapid relaxation in a full level laser system of the type shown in Figure 1a is all the more advantageous since the rapid phonon relaxation between the lower lasing level and the ground state provides a practically empty lower lasing level. This feature is shown in Figure 1b, in which the population densities at the pump band, upper lasing level, lower lasing level and ground state are shown for the Nd:YAG crystal during continuous pumping. Because the rate of fluorescence between the upper lasing level and lower lasing level is relatively slow in comparison with the phonon relaxation between the pump band and the upper lasing level, as well as between the lower lasing level and the ground state, the population density at the upper lasing level is substantially higher than that of the lower lasing level, yielding a high inversion ratio. The average lifetime of neodymium ions at the upper lasing level, prior to spontaneous fluorescence, is about 230 picoseconds at 300°K in Nd:YAG. In order for the pumping light to give rise to superfluorescent emission, the intensity of the pumping light must be sufficiently high such that a population inversion occurs, presenting conditions leading to amplified spontaneous emission with stimulated emission.

Referring now to Figure 2, which is a diagram of the absorption spectrum of Nd:YAG crystal at 300°K, it can be seen that Nd:YAG material has a relatively high optical density, and thus a short absorption length, at selected wavelengths. For this reason, it is advisable to select the wavelength of the pumping illumination source in order to permit the absorption length to be as short as possible. This will permit substantially complete absorption of the pumping illumination within a very short length of the Nd:YAG crystal. Although it appears from Figure 2 that the wavelength 0.58 micron is best suited for pumping illumination, the wavelength 0.81 micron is preferably selected in the embodiments of the present invention using Nd:YAG crystal as the laser medium.

Superfluorescent sources have been recently considered as candidates for low temporal coherence sources in many optical applications, in particular fiber gyroscopes and in some signal processing fiber systems. A superfluorescent source typically comprises a lasing cylinder end-pumped by a pumping source. The pump illumination launched into the lasing cylinder by well known coupling methods is sufficiently intense so as to present conditions leading to ASE. The resulting output laser beam is emitted at one end of the lasing cylinder after the beam has traversed the cylinder and undergone amplification by the group of atoms which initially emitted the beam. The output beam has characteristics intermediate between a truly coherent laser signal and a completely incoherent thermal source signal. In particular, the output beam has a low temporal coherence but a fair amount of spatial coherence. As mentioned hereabove, ASE is characterized by laser theorists as the phenomenon of light emission in which the spontaneous emission coming from a distribution of inverted laser atoms is linearly amplified by the same group of atoms. The gain should be substantial at least in one direction through the atoms. If the laser medium is large enough (long, thin cylinder of inverted atoms), the signal emitted and amplified by these atoms can produce an output beam which can be of high intensity, moderately directional and with very low temporal coherence. If the output radiation becomes strong enough, significant saturation along the gain medium can be achieved so that the major portion of the inversion energy is extracted into the directional output beam. A complete discussion of ASE can be found in Lasers by Siegman, University Science Books, pp. 547-556.

Superfluorescence, despite its spurious effects in certain high-gain amplifiers, thus presents several advantages, in particular in connection with optical fibers. These advantages open a new realm of possibilities, as will be shown by the detailed description of the preferred embodiments of the present invention.

Description of the First Embodiment

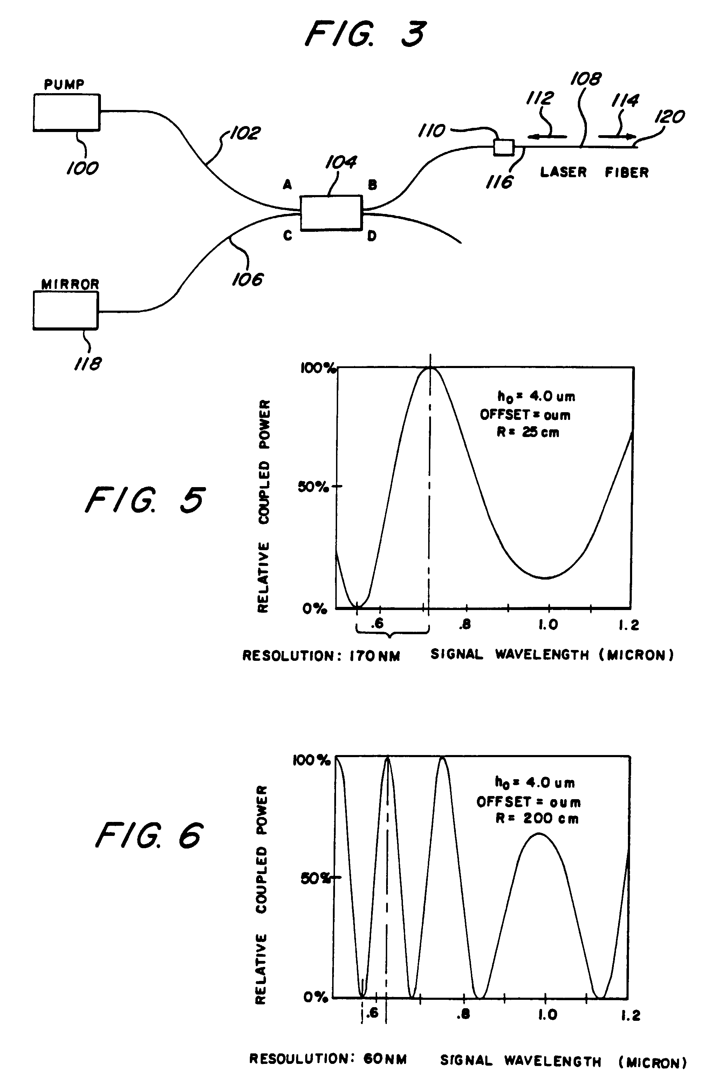

Reference is now made to Figure 3 which illustrates the first preferred embodiment of the present invention.

A source of pumping illumination 100 is coupled to a fiber 102 of a multiplexing coupler 104 to provide pumping illumination at port A of the multiplexing coupler 104. The coupler 104 preferably comprises two strands of optical fibers, the uppermost fiber 102 and a lowermost fiber 106. The pumping illumination from the source 100 is then transmitted to port B through the coupling action of the coupler 104, as described in further detail hereinbelow. The coupler 104 is indeed adjusted to have a 0% coupling efficiency at the wavelength of the source 100. An doped fiber 108, preferably an Nd:silica doped fiber, is coupled to port B of the coupler 104 by means of splices or other fiber connecting means 110 (butt joint or fused splice, for example). The illumination signal is sufficiently intense to produce amplified spontaneous emission within the doped fiber 108, thereby giving rise to a forward signal 114 and a backward signal 112 as indicated by the arrows in Figure 3. The signal emitted in the case of a Nd:silica doped fiber is in a range of wavelengths centered about 1060 nm, the full width at half maximum (FWHM) being generally approximately 17 nm. The forward signal 114 exits the doped fiber 108 at the end 120 thereof after travelling one length of the doped fiber 108. The backward signal 112 is launched into the coupler 104 at port B and is transmitted to port C through the coupling action of the coupler 104. The multiplexing coupler 104 is effectively fabricated for use in this invention to provide complete coupling of the lasing light at 1060 nm, while providing essentially no coupling at the wavelength of the pumping light at 800 nm or another wavelength suited for pumping illumination. A mirror or reflector 118 is attached, preferably cemented to the end of the lowermost fiber 106 of the coupler 104. The mirror 118 is designed to provide complete or quasi complete reflection at the wavelength of the output signal. The mirror 118 is preferably a dielectric mirror formed of multiple layers of dielectric material. The mirror 118 is typically cold-deposited on one end of the fiber 106 or bonded thereto according to techniques well-known in the art. Furthermore, the mirror 118 is selected such that the reflection of the backward signal 112 does not alter the wavelength thereof. The backward signal 112 is thus reflected back to port C and reinjected into port B of the coupler 104 through the same coupling action of the coupler 104. The backward signal 112 travels across the entire length of the doped fiber 108 and exits at the end 120 thereof. If G is the gain experienced by the signal during its traverse of the doped fiber 108, it is apparent that the forward signal 114 is approximately amplified by a factor $e^G$ when it exits the doped fiber 108, whereas the backward signal 112 is amplified by a factor $e^{2G}$ as it traverses the doped fiber 108 in two directions. If the gain G is high, it is clear that the output signal will be comprised principally of the backward signal 112. Such arrangement is extremely advantageous to increase the intensity of the total output signal.

It should be noted that reflection occurs only at one end of the doped fiber 108, thereby preventing resonant laser oscillations and preserving the conditions for broadband amplified spontaneous emission.

The optical system of the present invention therefore provides a convenient means to generate a superfluorescent signal by wavelength dependent coupling of a pump source to a doped fiber, while preventing loss of the backward laser signal by means of a mirror placed at one end of the fiber coupled to the coupler. Typical outputs in the order of 10-15 mW have been obtained with a linewidth of about 17 nm (FWHM) in a single mode $Nd:SiO_2$ fiber pumped near 810 nm with a CW Styryl 9 dye laser. Most of the output consists of the 1060 nm emission.

Referring again to Figure 3, the various optical components used in the first embodiment of the present invention will be described in further details hereinbelow.

The pump source 100 may be a laser diode which permits high concentrations of pump power in the fiber and thus in the doped fiber. Regardless of the type of pumping source utilized, the efficiency of the system will be enhanced if the wavelength of the radiation from the source corresponds with a peak in the absorption spectrum of the doped fiber, for example, of an Nd:silica doped fiber as shown in Figure 2. Electroluminescent diodes are commercially available with appropriate dopings to emit light in the 800 nm range. The spectrum of such diodes matches quite well the absorption spectrum of Nd:silica material at room temperature. For example, commercially available Ga(Al)As LEDs provide radiation spectra which are strong in the 800 nm region. Similarly, laser diode structures are commercially available which emit energy over the 850 nm range. In addition, the pump wavelength should be as close to the signal wavelength as allowed by the spectroscopy of the Nd:silica material to maximize the overall pumping efficiency. The preferred embodiment of the present invention utilizes a cw styryl laser dye pump source readily available in the commerce to emit in the range of 800-830 nm. Such a laser source coupled into an optic fiber may allow an 80% transmission at the wavelength of the light emitted by the source. Typically, the FWHM of such a laser pump source is approximately 30 nm.

It will be apparent to the person skilled in the art that the wavelength of the pump source light preferably corresponds to a peak in the absorption spectrum of the lasing material. In the case of Nd, this peak is selected at 804 nm. However, for practical considerations, a proximate wavelength such as 820 nm is acceptable. When silica is used as the host material of the doped fiber, it has been observed that of the two emission lines of $Nd:SiO_2$ (900, 1060 nm), only the 1060 nm line reflected by the mirror has large net gain. The 900 nm line is simply self-absorbed in the fiber. Other weaker emission lines may be present but are too weak to be detected by commercial silicon detectors.

The doped fiber 108 used in the device of the present invention is readily commercially available. It comprises a core, preferably fabricated from a host glass doped with an active laser material and a cladding that surrounds the core.

In its preferred embodiment, the doped fiber 108 includes a core fabricated from a host glass doped with an active laser material and a cladding that surrounds the core. Alternatively, the cladding can contain the actual laser material in a thin layer adjacent to the core so that the single-mode light distribution overlaps the active material. The preferred active material is neodymium, although other rare earth materials including ytterbium and erbium are likewise suitable. The concentration of the dopant in the host glass can vary from a lower limit determined by convenience in length to absorb the pump light and to avoid light loss from excessive lengths required for the particular application and an upper limit determined by concentration quenching. In general, a concentration range between 0.1 and 30% (by weight) is suitable. The preferred host glasses include the alkali, alkaline earth silicates, although other silicates, germinates, phosphates and some borate glasses are likewise suitable. The index of refraction of the core is selected to be higher than that of cladding so that the pumping light introduced into the core and light emitted by the active material is contained within or in the vicinity of the core. The diameter "D" of the core is preferably determined, in part, by the particular application, that is, the diameter of optical fiber into which the light output of the light source 100 is introduced. In general, the diameter of the core is preferably the minimum necessary into which pump light can be efficiently coupled for the particular application to maximize the radiant energy emitted per unit area for a particular pumping light energy level. Thus, where the light source 100 is to supply light to a single-mode optical fiber or device, the diameter of the core is selected to give single-mode light transmission at the emission wavelength. For a single-mode transmission, the diameter of the core depends on the indices of refraction of the core and cladding; a diameter of 1-20 microns, or even up to 50 microns, for wavelengths in the near infrared and visible region of the light spectrum can provide single-mode transmission. If desired, the diameter of the core can be larger than the minimum for the particular application. For example, where the light source 100 is to be coupled to a single-mode doped fiber having a core diameter of 4 microns, the core can have a somewhat larger diameter, e.g., 6 microns, to facilitate coupling. In general, for a circular cross section of the core, the core size is determined by making $(\pi d/\mu)NA$ equal to or less than 2.4 where d is the core diameter, $\lambda$ is the wavelength of the emitted light, and NA is the numerical aperture which is related to the indices of refraction of the core and cladding, $n_1$ and $n_2$, by NA equals $(n_1 n^2 - n_2^2)^{1/2}$.

In the preferred embodiments of the present invention, silica or YAG is used as host materials, whereas neodymium or erbium constitute the lasing material. The diameter of the doped fiber 108, preferably a Nd:silica doped fiber, may be extremely small in comparison with the diameter of Nd:silica rods used in prior art optical systems. For example, an optical system has been constructed wherein the fiber has a diameter of 100 microns. Even smaller diameters are feasible, approaching the diameter of a single-mode fiber. Coupling between the fiber and the crystal in single crystal fiber lasers is enhanced as the diameter of the crystal is reduced and signal gain is increased since density of pumping illumination from the source within the crystal increases as the crystal diameter is reduced.

The advantages of doped fibers are numerous and include their high gain, excellent conversion efficiency and interfaceability to single-mode silica fibers, low propagation loss and compactness. A more complete review of the characteristics of doped fibers can be found in U.S. Patent No. 3,456,211 to Koester, issued on July 15, 1969.

The multiplexing coupler utilized in the preferred embodiment of present invention selectively couples a first optical frequency while not coupling a second optical frequency. In the preferred embodiments of the present invention, polished fiber couplers are used. Other fiber multiplexers are also suitable, such as fused biconical-taper couplers or integrated optics couplers. Polished fiber couplers, as well as methods for constructing the same, required for such selective coupling are disclosed in U.S. Patent No. 4,556,279, published on December 3, 1985, and listing Herbert J. Shaw and Michael J. F. Digonnet as inventors, assigned to the assignee of the present invention.

Background information on optical couplers may be found in U.S. Patents No. 4,515,431 and 4,674,830 assigned to the assignee of the present invention.

The principal characteristics of polished cladding multiplexing couplers and their method of manufacture can be found in the aforementioned patents and can be summarized in the following manner.

Reference is made to Figure 4, which illustrates a polished cladding multiplexer. A coupler 210, made of two coupler halves 210a and 210b includes two strands 212a and 212b of a fiber optic material, preferably single-mode fibers, mounted in longitudinal arcuate grooves 213a and 213b, respectively, formed in optically flat confronting surfaces 214a and 214b, respectively, of rectangular bases or blocks 216a and 216b, respectively.

Each of the strands 212a, 212b comprise an optical fiber which is doped to have a central core and an outer cladding. The strands typically have a core diameter on the order of 5 microns and a cladding diameter on the order of 125 microns.

The arcuate grooves 213a and 213b have a radius of curvature which is very large compared to the diameter of the fibers 212, and have a width slightly larger than the fibers 212, when mounted therein, to conform to a path defined by the bottom walls of the grooves 213. The depth of the grooves 213a and 213b varies from a minimum at the center of the blocks 216a and 216b, respectively, to a maximum at the edges of the blocks 216a and 216b, respectively. This advantageously permits the fiber optic strands 212a and 212b, when mounted in the grooves 213a and 213b, respectively, to gradually converge toward the center and diverge toward the edges of the blocks 216a, 216b, thereby eliminating any sharp bends or abrupt changes in direction of the fibers 212 which may cause power loss through mode perturbation.

Fiber optic material was removed from each of the strands 212a and 212b, e.g., by polishing, to form the respective oval-shaped planar surfaces 218a, 218b, which are coplanar with the confronting surfaces 214a, 214b, respectively. Thus, the amount of fiber optic material removed increases gradually from zero towards the edges of the blocks 216 to a maximum towards the center of the blocks 216. This tapered removal of the fiber optic material enables the fiber cores to converge and diverge gradually, which is advantageous for avoiding backward reflection and excess loss of light energy.

In the embodiment shown, the coupler halves 210a and 210b are identical and are assembled by placing the confronting surfaces 214a and 214b of the blocks 216a and 216b together, so that the confronting surfaces 214a and 214b of the strands 212a and 212b are in facing relationship.

An index matching substance (not shown), such as index matching oil, is provided between the confronting surfaces 214 in a thin film form.

An interaction region 232 is formed at the junction of the strands 212, in which light is transferred between the strands by evanescent field coupling. It has been found that, to ensure proper evanescent field coupling, the amount of materials removed from the fibers 212 must be carefully controlled so that the spacing between the core portions of the strands 212 is within a predetermined "critical zone." The evanescent fields extend into the cladding and decrease rapidly with distance outside their respective cores. The blocks or bases 216 may be fabricated of any suitable rigid material.

Tests have shown that evanescent wave polished couplers can have a coupling efficiency of up to 100%. However, it has also been observed that these couplers may be "tuned" to adjust the coupling efficiency to any desired value between zero and the maximum. Such tuning may be accomplished, e.g., by relatively laterally sliding the fibers in a direction perpendicular to their length. The relative positions of the fibers may be defined in terms of their offset, i.e., the distance between the central axes of the fiber cores, measured in the direction perpendicular to their length, along the confronting surfaces. Thus, referring to Figure 4 again, when the oval surfaces 218 are superimposed, the offset is zero, and the offset increases as the fibers 212 are laterally separated by relatively sliding the blocks 216.

The coupler 210 illustrated in Figure 4 is highly directional, with substantially all of the power applied at one side of the coupler being delivered to the other side of the coupler. The coupler directivity is defined as the ratio of the power at port D to the power at port C, with the input applied to port A. Further, the coupler directivity is symmetrical for a given mode of propagation. That is, the coupler operates with the same characteristics regardless of which side of the coupler is the input side and which side is the output side. Moreover, the coupler 210 achieves these results with very low throughput losses.

The coupler 210 operates on evanescent field coupling principles in which guided modes of the strands 212 interact, through their evanescent fields, to cause light to be transferred between the strands 212. As previously indicated, this transfer of light occurs at the interaction region 232. The amount of light transferred is dependent upon the proximity and orientation of the cores, as well as the effective length of the interaction region 232. As will be described in detail below, the amount of light transferred is also dependent on the wavelength of the light. The length of the interaction region 232 is, in turn, dependent upon the radius of curvature of the fibers 212, and to a limited extent, the core spacing, although it has been found that the effective length of the interaction region 232 is substantially independent of the core spacing. However, the "coupling length," i.e., the length within the interaction region 232 which is required for a single, complete transfer of a light signal from one fiber 212a to the other 212b, is a function of the core spacing as well as of the wavelength. However, if the length of the interaction region 232 is increased, or the core spacing decreased, a phenomenon referred to herein as "overcoupling" will occur, since the coupling length is shorter than the effective interaction length. Under these circumstances, the light will transfer back to the strand from which it originated. As the interaction length is further increased and/or the core spacing further decreased, the effective interaction length increases relative to the coupling length, and at least some of the light transfers back to the other strand. Thus, the light may make multiple transfers back and forth the two strands 212 as it travels through the region 232, the number of such transfers being dependent on the length of the interaction region 232, the light wavelength (as described below) and the core spacing.

Since the coupling length in a fiber coupler, typically a monomode fiber as described above, shows a strong dependence on signal wavelength, as described in detail in the aforementioned patents incorporated above, it is possible with properly chosen geometrical parameters for the coupler 210, to totally couple one signal wavelength while a second signal wavelength remains essentially uncoupled. This phenomenon permits the separation of two signals fed into the ports on two sides of the coupler 210. Thus, as shown in Figure 4, if a pumping signal having a wavelength $\lambda_1$ is fed into port A of coupler 210, and a superfluorescent signal having a wavelength $\lambda_2$ is coupled to port B, and the geometry is properly selected, both signals can be separated such that the superfluorescent signal is entirely coupled from port B to port C, whereas the pumping signal undergoes no coupling from port A to port B.

To illustrate this wavelength dependence, Figure 5 provides a plot of coupled power versus signal wavelength in the visible and near infrared spectrum for a particular coupler geometry. Because for this coupler configuration the effective interaction length of the coupler is an odd multiple of the coupling length for the selected wavelength 720 mm, but an even multiple of the coupling length for the selected wavelength 550 nm, the wavelength 720 nm will be 100% coupled, while the wavelength 550 nm will be effectively uncoupled. With different efficiencies, different wavelengths may be combined or separated. For instance, 590 nm and 650 nm may be separated or combined at an 80% efficiency.

Virtually any pair of wavelengths ($\lambda_1$, $\lambda_2$) may be efficiently combined or separated so long as the effective interaction length is an even multiple of the coupling length for one wavelength and an odd multiple for coupling length for the other wavelength. As the number of coupling lengths within the effective interaction length increases, the resolution of the multiplexer is enhanced by increasing the radius of curvature of the fibers 212a, 212b. Provided that the interaction length of the coupler is large enough, virtually any two signals may be exactly mixed or separated, regardless of how closely spaced their wavelengths are.

The interaction length is a function of wavelength, and the resolution is approximately proportional to $(R)^{-1/2}$, where R is the radius of curvature of the strands 212. As R increases, the effective interaction length increases, and becomes a higher multiple of the coupling length, improving resolution. This result is illustrated in Figure 6, which is comparable to the graph of Figure 5, except that the radius of curvature has been increased to 200 centimeters. As anticipated, this increase in radius improves the coupler resolution near $\lambda = 600$ nm from approximately 170 nm in the 25 centimeter radius example of Figure 5 to approximately 60 nm in the 200 centimeter case.

The resolution of a multiplexing coupler depends on two independent parameters, H (fiber spacing) and R (radius of curvature of the fibers). For a given pair of signal wavelengths, efficient mixing may be achieved by first properly selecting a fiber spacing H for the coupler which yields a large wavelength dependence for the wavelengths of interest (choice of H) and then be selecting a radius of curvature which yields a resolution equal to the difference between the wavelengths (choice of R).

After the resolution of the coupler has been set in accordance with the wavelengths to be separated, the coupler may be tuned to precisely adjust the coupling lengths for the wavelengths of interest so that the effective interaction length is an even multiple of the coupling length of one wavelength and an odd multiple of the coupling length of the other wavelength. This is accomplished by offsetting the fibers by sliding the blocks 216a, 216b (Figure 4) relative one another in a direction normal to the axis of the fibers 212a, 212b. Such an offset has the effect of increasing the minimum fiber spacing H and increasing the effective radius of curvature of the fibers. If the required offset is small enough, it will not upset the multiplexer resolution. This stems from the fact that the separation H of a large radius coupler changes rapidly with fiber offset in comparison to changes in the effective radius of curvature with fiber offset.

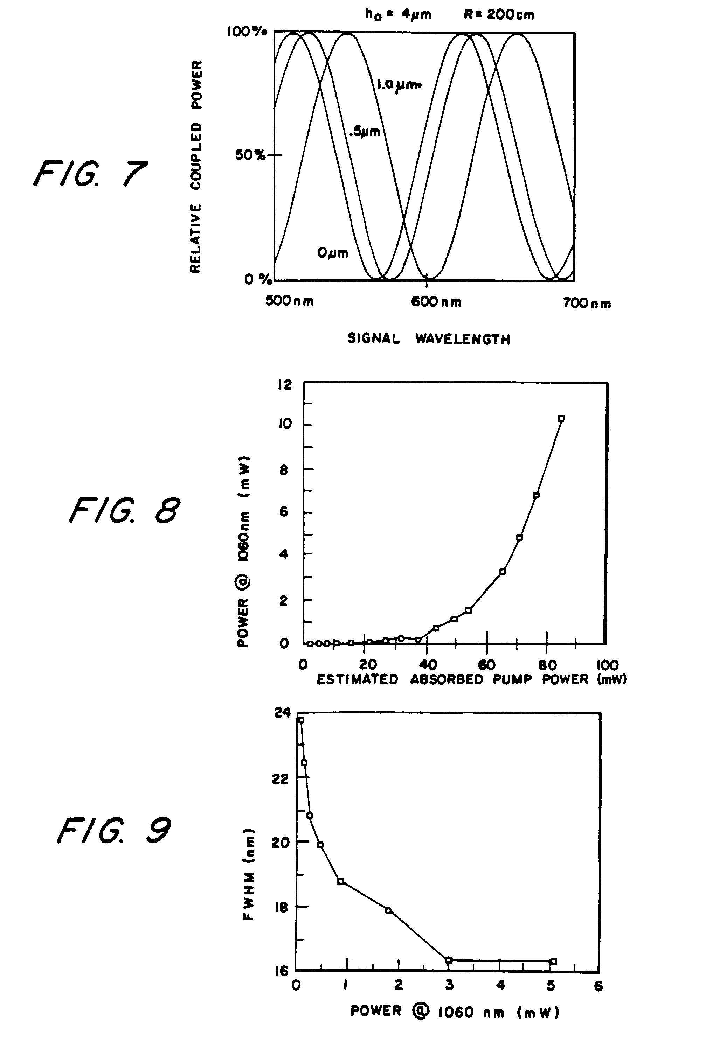

To illustrate this tunability of multiplexing couplers, Figure 7 provides a plot of relative coupled power versus wavelength for three increasing values of fiber offset (0 microns, 0.5 microns and 1.0 microns). The curve is seen to shift toward increasing wavelengths as the offset increases, while the period of oscillation (or resolution) remains virtually unchanged. In this particular example (R = 200 cm, H = 4 microns), a 1-micron offset shifts the curve by approximately 45 nm.

In the preferred embodiment of the present invention using a laser source emitting at 820 nm and a superfluorescent doped fiber emitting at 1060 nm, the selective coupling is accomplished in accordance with the technique described above, by properly selecting the fiber spacing H to yield a large wavelength dependence for wavelengths between 0.8 microns and 1.06 microns, and then by selecting a radius of curvature for the fibers which yields a resolution equal to the difference between 1.06 and 0.8 microns, or 0.26 microns. After the resolution of the coupler has been set in this manner, the coupler may be tuned as previously described to adjust the coupling length for the wavelengths 0.8 micron and 1.06 microns so that the effective interaction length is an even multiple of the coupling length for one of this pair of wavelengths and an odd multiple of the coupling length for the remaining wavelength.

In the embodiment shown in Figure 3, since it is desired to couple the output of the doped fiber into the fiber 106, the effective interaction length for the coupler should be adjusted to be an odd multiple of the coupling length of the wavelength of the doped fiber, 1.06 microns and to be an even multiple of the source light frequency, 0.8 micron. This will result in a complete coupling of the laser light coming from the doped fiber from the fiber 102 into the fiber 106, with essentially no coupling of the source illumination signal to be transmitted from the fiber 102 to the fiber 106. It will be understood, of course, that no coupling in this instance means an even number of complete couplings so that, for example, if the effective interaction length at the interaction region 232. is twice the coupling length at 1.06 microns, the laser output will be coupled two complete times, one from the fiber 102 to the fiber 106, and then from the fiber 106 to the fiber 102. Although adjustable couplers were used experimentally in embodying the present invention, it will be apparent to a person skilled in the art that other couplers can be used. Adjustable couplers are advantageous inasmuch as they can be readily "tuned" although the index-matching oil used at the interface of the two blocks of an adjustable coupler is prone to thermal dilatation. In many applications, fused couplers may be preferable to adjustable couplers as they are less sensitive to temperature.

Referring again to Figure 3, if a signal is present in the lowermost fiber 106, the optical system of the present invention may operate as an amplifier, in accordance with the teachings disclosed in the parent application, U.S. Patent No. 4,674,830. The signal to be amplified is selected to have a wavelength at the laser transition wavelength, 1.064 microns, i.e., the wavelength of light emitted by the Nd ions during relaxation between the upper and lower lasing levels. When the signal to be amplified is injected into the lowermost finer 106 and supplied to the doped fiber 108 by the coupler 104, it will trigger the emission of stimulated photons at the same frequency as the signal, coherent with the signal, and will be thereby amplified. Thus, the passage of light at this frequency will cause a photon-emitting relaxation between the upper lasing level and lower lasing level as shown in Figures la and lb, in phase with the light signal to be amplified, yielding an effective gain for the input light signal. The optical system of the present invention thus functions as an amplifier. In this particular configuration, there is no reflector placed at the end of the lowermost fiber 106. are selected so that the signal can be transmitted through The amplifier signal is output at the end 120 of the doped fiber 108.

Reference is now made to Figure 8 which represents a graph of the output power versus estimated absorbed pump power for a superfluorescent source as disclosed in connection with the description of Figure 3. The fiber output is essentially unpolarized. At 10 mW output power, the conversion slope efficiency is 45% with a net conversion efficiency between the absorbed pump power and the 1060 nm signal of 12%. For low pump power, the output power increases linearly with pump power due to additive spontaneous emission. As stimulated emission becomes significant, the output increases nonlinearly essentially as $e^{2G}$, where G is the line center gain experienced by a signal which has travelled the whole length of the device. Placing the mirror 118 at one end of the fiber 106 effectively doubles the active length and, barring any saturation effects, doubles the gain. It should be noted that this is a very large effect as the output now increases as $e^{2G}$. The output power drops to about 300μW for 80 mW absorbed pump when the mirror 118 is removed.

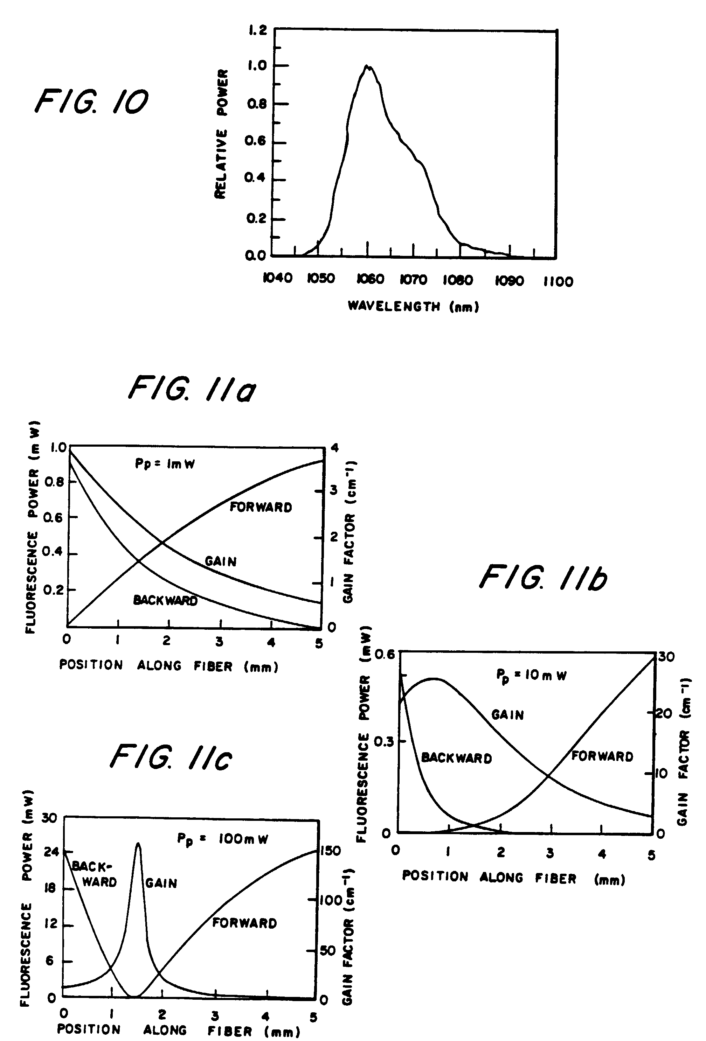

Reference is now made to Figure 9, which shows how the measured linewidth narrows asymptotically due to greater amplification at the peak of the output spectrum and becomes nearly constant at about 16 nm for total output power in the mW range. In Figure 9, the pump wavelength is selected to be 825 nm. Figure 10 shows a typical output spectrum of the 1060 nm line with 4.8 mW total power for a pump wavelength of 825 nm.

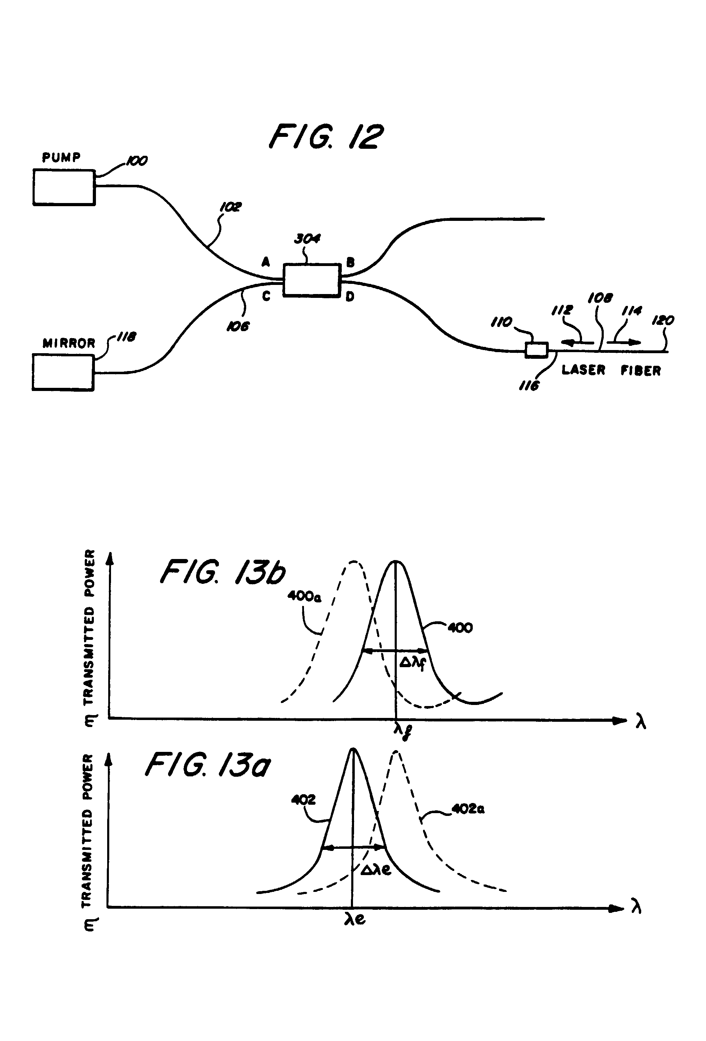

Referring now to Figures 11a, 11b and 11c, there is illustrated the evolution of the gain factor and total fluorescence power along the length of a preferred embodiment of the present invention using a 1% Nd-doped YAG superfluorescent doped fiber. The material parameters are such as $\sigma_s = 3.2.10^{-19}$ cm$^2$, $\tau_f = 230\mu$s and $n_1 = 1.820$, where $\sigma_s$ is the simulated cross section at line center, $\tau_f$ is the fluorescence lifetime of the material and $n_1$ is the core index of the doped fiber. The pump wavelength source is assumed to be $\lambda_p = 810$ nm and the material absorption coefficient $\alpha_a$ approximately 4 cm$^{-1}$. Figure 11a shows that at low pump power levels, spontaneous emission dominates and the forward and backward waves P$^+$ and P$^-$ build up almost linearly. The gain factor is essentially unsaturated and decays exponentially from left (input side) to right as a result of pump absorption. At high pump power (Figure 11b), stimulated emission is dominant and the fluorescence power grows exponentially. At high enough pump power, the fluorescence grows to very large levels near the input and output ends of the fiber, where the gain factor is strongly reduced by population inversion depletion (Figure 11c). The gain factor exhibits a sharp maximum near the center of the fiber where the total fluorescence power, which is the sum of the power of the forward signal P$^+$ and of the power of the backward signal P$^-$, is minimum.

Description of the Second Embodiment

It will be recognized that the results achieved in the present invention may also be realized using a coupler in which the coupling efficiency at the pumping illumination wavelength is 100%, while the coupling efficiency at the laser output wavelength is 0%.

Figure 12 is an illustration of such an embodiment. In this embodiment, the pump source and the mirror are coupled to the coupler similarly to the first embodiment described hereabove in connection with Figure 3. As Figure 12 incorporates the same elements described in connection with Figure 3, the same numerals used in Figure 3 will be used in Figure 12 to designate the same elements. The multiplexing coupler of Figure 12, however, has characteristics different from the coupler 104 of Figure 3, and will be designated by the numeral 304. The pump source 100 therefore provides pumping illumination at port A of a multiplexing coupler 304 via a fiber 102, whereas a mirror 118 is coupled to one end of a fiber 106 at port C. A doped fiber 108 is coupled at port D in the manner explained in connection with the description of Figure 3. The doped fiber 108 is preferably coupled to the optical fiber by means of a splice 110 or may simply be fused to that optical fiber 106. Port B is preferably left uncoupled.

In this embodiment, the coupler 304 is adjusted to substantially have a 100% coupling efficiency at the wavelength of the pumping source and a 0% coupling efficiency at the wavelength of the light signal emitted by the doped fiber 108.

The light from the pumping source 100 is first transmitted along the fiber 102, and coupled from port A to port D into the doped fiber 108. The doped fiber, preferably an Nd:silica fiber, emits a superfluorescent signal in both the backward and the forward directions as indicated by the arrows 112 and 114 in Figure 22. The forward signal 114 is output, uncoupled, to the output end 120 of the doped fiber 108. The backward signal 112, however, is injected back into the coupler 304 at port D and is transmitted to the fiber 106, after being coupled an even number of times through the coupling function of the coupler 304. The backward signal 112 is therefore transmitted from port D to port C and is injected into the optical fiber 106 to which is attached to the mirror 118. The backward output 112 is therefore reflected back to the coupler 304 through the action of the mirror 118 and transmitted to port D of the coupler 304. The backward signal 112 after reflection on the mirror is finally output to the output end 120 of the doped fiber 108.

Operative Modes of First and Second Embodiments

A person skilled in the art will recognize that the embodiments illustrated hereabove both function according to the same principles. One major advantage over the prior art resides in the fact that the pumping illumination is directly launched into the doped fiber without traversing the mirror as was performed heretofore in the prior art. In the embodiments of the present invention, the pumping illumination injected into the optic fiber 102 is subsequently coupled through coupling function of the coupler 104 (304) either to port B or to port D depending upon the selected embodiment. The pumping signal is never transmitted to the adjacent optic fiber 106 and the mirror 118. It will be apparent to a person skilled in the art that in the present invention, the pump coupling efficiency is substantially increased. This is particularly advantageous as pump power is critical in generating superfluorescence in the doped fiber.

The use of the mirror 118 to reflect the superfluorescent signal greatly increases the total gain of the fiber and permits to reduce the power of the pumping source. By means of a specific example, for a doped fiber with a gain of approximately 0.3 dB/mW, a laser source of output approximately 60-70 mW is typically necessary to obtain a total gain of 9 dB. In the device of the present invention, the double passage of the pumping signal by means of the reflector 118 dramatically reduces the required source power by a factor of 2 as a laser source of 30-35 mW is sufficient to obtain the same gain of 9 dB. The aforementioned embodiments of the present invention also greatly simplify the coupling process as well as the requirements pertaining to the operation of the mirror. In the device of the present invention, the mirror is preferably a high reflector and need not be selected in accordance with other criteria such as its multiplexing properties. Furthermore, in the preferred embodiments of the present invention, the pump signal need not traverse a mirror before launching into the doped fiber. Various coupling methods can therefore be envisaged to improve the coupling efficiency. This is particularly true for pump sources such as laser diodes whose coupling efficiency is generally low. In the preferred embodiments of the present invention, such efficiency, even with pumping sources such as laser diodes, is greatly improved. Coupling techniques well known in the art are therefore applicable to the devices of the present invention. These coupling techniques include, inter alia, tapering the extremity of the fiber at port A. Tapered fibers are generally used to channel light from a source or a fiber of comparatively large cross section into a fiber of smaller cross section. By drawing a fiber such that one end thereof has a larger cross section than the other end, it is possible to efficiently couple light emitted by a light source into an optical fiber. Integrated microlenses on the fiber end can also be advantageously used. It is well known in the art that those coupling techniques also improve the frequency stability of the system and more generally ameliorate the performance thereof. A thorough discussion of tapered fibers may be found in Optical Waveguide Theory by Allan Snyder and John Love, Chapman and Hall, 183, London, Great Britain, pp. 107-112.

In the present invention, mode-matching is also optimized and is substantially better than with regular optical components such as lenses. By butting the fiber directly to the doped fiber, the device thus obtained according to the present invention is very robust, compact and less prone to failure or susceptible to damage during transportation, for example. Another major progress over the prior art offered by the aforementioned embodiments of the present invention resides in the particularly advantageous design which permits a separation of the source signal and of the laser signal. In devices of the prior art, both the source signal and the laser output travel along the same optical waveguides. It is preferable that the laser light does not return to the pump source nor the coupling optics as such signal propagating towards the cavity of the pumping source may create feedback on the signal path. In the preferred embodiments of the present invention, the output laser signal is coupled to the mirror via the coupler either after a 100% transmission through the coupler (first embodiment illustrated in Figure 3) or after a 0% transmission through the coupler (second embodiment illustrated in Figure 12). The laser signal therefore does not "see" the cavity of the pump source or the coupling optics, which results in reduced feedback into the signal path emerging from the pump source. This is a substantial advantage of the invention over prior art devices which did not maintain the laser signal spectrum free of undesirable structure-induced resonance effects. The coupler thus acts as an isolator by preventing the laser output signal to propagate back to the cavity of the pump source.

Another and critical advantage of the present invention results from the substantial improvement in the temperature dependence of the superfluorescent source due to the filtering effect produced by the coupler.

The coupler 104 or 304 in the preferred embodiments respectively illustrated in Figures 3 and 12 advantageously perform at least two important functions. It first acts as a multiplexer insofar as it provides specific routes to the signals propagating therethrough in accordance with the frequencies of these signals. This multiplexing function has been described hereabove in connection with the description of Figures 3 and 12. Furthermore, the coupler used in the present invention is advantageously used to stabilize the superfluorescent signal emitted by the doped fiber 108 against temperature changes.

A coupler is typically characterized by a filter function which depends on the structural configuration of the coupler. Some filter functions representing a coupler power versus signal wavelength were described hereabove in connection with Figures 5, 6 and 7. In order to gain a better understanding of the frequency stability achieved by the filtering functions of the frequency stability achieved by the filtering functions of the coupler and the temperature dependence of the coupler, reference is now made to Figure 13a which is a diagram illustrating the temperature dependence of a given coupler function. The coupler wavelength dependence function is plotted in Figure 13a using the power transmitted through the coupler $\eta$ as the ordinate and the wavelength $\lambda$ as the abscissa. Theoretical calculations and experimental data indicate that an increase temperature translates the filtering function represented by the curve 400 in the direction of the lower wavelengths, therefore onto the left-hand side of Figure 13, thereby yielding a new curve 400a for a higher temperature. Theoretical calculations also show that the horizontal displacements of the curve 400 in Figure 13a are substantially independent of the full width at half maximum (FWHM) of the coupler. The following formula has been proposed to describe the temperature dependence of the filter function for all-glass fiber optic couplers:

$$\frac{\partial \lambda_f}{\partial T} = -\lambda_f (\alpha + \rho) \tag{1}$$

wherein $\lambda_f$ is a wavelength of the filter function around the center wavelength, T the absolute temperature, $\alpha$ is the expansion coefficient and $\rho$ is the thermo-optic coefficient of the coupler. Details on those theoretical calculations can be found in an article by G. Meltz, et al., entitled "Cross-Talk Fiber-Optic Temperature Sensor," Applied Optics, Vol. 22, No. 3, February 1, 1983.

The coefficient $(\alpha + \rho)$ is quasi-independent of the glass type and has a value in the order of $10^{-5}/°C$ for all-glass couplers. Thus, typically, the quantity $1/\lambda_f \cdot \partial\lambda_f/\partial T$ is about -10 ppm/°C for an all-glass coupler. In adjustable fiber couplers, however, wherein a liquid layer is inserted at the interface formed by the cores of the coupled fibers, the thermo-optic coefficient of the coupler is higher. Temperature dependence in the order of several hundreds of ppm/°C is not uncommon in polished fiber couplers. More details on the temperature dependence of adjustable polished couplers can be found in Michael Digonnet, et al., "Analysis of a Tunable Single Mode Optical Fiber Coupler," <u>IEEE Journal of Quantum Electronics</u>, Vol. QE-18, No. 4, April 1982, pp. 746-754, and in M. Digonnet, et al., "Wavelength Multiplexing in Single-Mode Fiber Couplers," <u>Applied Optics</u>, Vol. No. 22, No. 3, February 1, 1983, pp. 484-491.

As to the filter linewidth of the coupler, it may vary from a few angströms (narrow filter) to several hundreds of nanometers (200 nm or so) depending on the fiber selected and the radius of curvature of the fiber. The full-width at half maximum (FWHM) is typically represented by $\Delta\lambda_f$ and is the line width of the filter function at half the maximum of power transmitted. $\Delta\lambda_f$ is indicated in Figure 13a.

On the other hand, the wavelength of the superfluorescent signal emitted by the fiber source is also dependent upon temperature. Those skilled in the art will recognize that all fiber sources, including resonant and non-resonant sources, exhibit an intrinsic wavelength dependence of their emission wavelength $\lambda$ with respect to temperature characterized by the coefficient $\delta\lambda_p/\delta T$. Reference is now made to Figure 13b which illustrates the temperature dependence of the emission spectrum of a superfluorescent fiber source in accordance with the present invention. In Figure 13b, the emission spectrum is represented by the curve 402. Temperature affects this spectrum by translating it towards the right-hand side so as to yield curve 402a. Typically, the temperature dependence of a fiber source is in the order of a few ppm per °C (10-20 ppm/°C).

The full-width at half maximum (FWHM) of a fiber source, $\Delta\lambda_p$, may typically vary from sub-nanometers to a few tens of nanometers. However, for most optical applications, including fiber gyroscopes, a FWHM in the order of 20-30 nm is preferable in practice.

One of the advantages of the present invention is to advantageously use a coupler with selected temperature dependence characteristics so as to at least partially cancel the temperature drift of the emission spectrum. Figure 13b shows that the emission spectrum of the fiber source is translated towards the higher wavelengths with a temperature increase; simultaneously, the same temperature increase displaces the multiplexing curve of the coupler towards the lower wavelengths.

When light emitted by the source with a given spectrum is filtered by a coupler with a given filter function, the intensity of the filtered light is simply the product of the spectrum function by the filter function for a particular wavelength. The spectrum of the filtered light is therefore given by the following equation:

$$P_{filtered(\lambda)} = P_{source(\lambda)} \cdot P_{coupler(\lambda)} \tag{2}$$

where $P_{filtered}$ is the total output signal power, $P_{source}$ is the power of the source signal before coupling the $P_{coupler}$ transmitted by the coupler for a given wavelength.

By appropriately selecting the variation of wavelength with respect to temperature of the coupler used in the device of the present invention, it is possible to cancel or at least minimize the temperature drift of the fiber source emission spectrum.

For numerous applications, comprising gyroscope applications, the person skilled in the art will recognize that the quantity in the emission spectrum which should be made stable with respect to temperature is the average spectrum wavelength $<\lambda>$, rather than the center wavelength $\lambda\rho$ of the spectrum.

This average spectrum wavelength $<\lambda>$ is defined by the following expression for a signal emitted by a source and filtered by a multiplexing coupler.

$$<\lambda> = \frac{\int_{spectrum} \lambda\, P(\lambda)\, F(\lambda)\, d\lambda}{\int_{spectrum} P(\lambda)\, F(\lambda)\, d\lambda} \tag{3}$$

wherein $P(\lambda)$ is the emission spectrum function of the source and $F(\lambda)$ is the filter function of the coupler. The subscript "spectrum" appearing under the integral sign $\int$ refers to the fact that the integrations are performed for the values $\lambda$ of the emission spectrum.

Theoretical calculations have yielded the following results summarized in Table 1 and in Table 2 below:

TABLE 1

| ΔT°C | $\partial\lambda_\rho/\Delta\lambda_\rho$ | $\partial\lambda_f/\Delta\lambda_f$ | Unfiltered $(\partial<\lambda>/\Delta\lambda_\rho)$ | Filtered $(\partial<\lambda>/\Delta\lambda_\rho)$ | Net Improv. |
|---|---|---|---|---|---|
| 180 | $5.10^{-3}$ | $-2.05.10^{-3}$ | $-1.8.10^{-3}$ | $1.135.10^{-8}$ | 52.0 dB |
| 144 | $4.10^{-3}$ | $-1.64.10^{-3}$ | $-1.45.10^{-3}$ | $7.54.10^{-9}$ | 52.8 dB |
| 108 | $3.10^{-3}$ | $-6.1576.10^{-3}$ | $-1.09.10^{-3}$ | $4.76.10^{-9}$ | 53.5 dB |
| 72 | $2.10^{-3}$ | $-8.21.10^{-4}$ | $-7.25.10^{-4}$ | $2.74.10^{-9}$ | 54.2 dB |
| 36 | $1.10^{-3}$ | $-4.105.10^{-4}$ | $-3.63.10^{-4}$ | $1.24.10^{-9}$ | 54.7 dB |
| 18 | $5.10^{-4}$ | $-2.05.10^{-4}$ | $-1.81.10^{-4}$ | $6.06.10^{-10}$ | 54.8 dB |
| 1.8 | $5.10^{-4}$ | $-2.05.10^{-5}$ | $-1.81.10^{-5}$ | $6.00.10^{-11}$ | 54.8 dB |
| with $\Delta\lambda_\rho = 0.7215$ and $\Delta\lambda_f = 2.0$. | | | | | |

TABLE 2

| ΔT°C | $\partial\lambda_\rho/\Delta\lambda_\rho$ | $\partial\lambda_f/\Delta\lambda_f$ | Unfiltered $(\partial<\lambda>/\Delta\lambda_\rho)$ | Filtered $(\partial<\lambda>/\Delta\lambda_\rho)$ | Net Improv. |
|---|---|---|---|---|---|
| 108 | $3.10^{-3}$ | $-1.913887.10^{-3}$ | $-2.45\times10^{-3}$ | $6.61\times10^{-10}$ | 65.7 dB |
| 72 | $2.10^{-3}$ | $-1.276.10^{-3}$ | $-1.63\times10^{-3}$ | $-1.35\times10^{-8}$ | 50.8 dB |
| 36 | $1.10^{-3}$ | $-6.38.10^{-4}$ | $-8.16\times10^{-4}$ | $-1.09\times10^{-8}$ | 48.7 dB |
| 18 | $5.10^{-4}$ | $-3.19.10^{-4}$ | $-4.08\times10^{-4}$ | $5.99\times10^{-3}$ | 48.3 dB |
| 3.6 | $1.10^{-4}$ | $-6.38.10^{-5}$ | $-8.16\times10^{-5}$ | $1.23\times10^{-9}$ | 48.2 dB |
| 1.8 | $5.10^{-5}$ | $-3.19.10^{-5}$ | $-4.08\times10^{-5}$ | $-6.17\times10^{-10}$ | 48.2 dB |
| with $\Delta\lambda_\rho = 0.7215$ and $\Delta\lambda_f = 5.0$. | | | | | |

In the above tables, the variables defined therein are as follows:

- ΔT: variation in temperature in C;
- $\Delta\lambda_\rho$: FWHM of the source;
- $\Delta\lambda_f$: FWHM of the coupler;
- $\delta\lambda_\rho/\Delta\lambda_\rho$:variation of the source emission spectrum center wavelength, normalized with respect to the FWHM of the source, due to the temperature change ΔT;
- $\delta\lambda_f/\Delta\lambda_f$: variation of the coupler function center wavelength, normalized with respect to the FWHM of the coupler, due to the temperature change ΔT;
- $(\delta<\lambda>/\Delta\lambda_\rho)$: (unfiltered) : variation of the average spectrum wavelength $<\lambda>$ due to the temperature change ΔT, without using a multiplexing coupler;
- $(\delta<\lambda>/\Delta\lambda_\rho)$: (filtered) : variation of the average spectrum wavelength $<\lambda>$ due to the temperature change ΔT, using a multiplexing coupler.

The last column in Tables 1 and 2 indicates the net improvement obtained by using a coupler as disclosed in the present invention. Tables 1 and 2 respectively correspond to a narrow filter ($\Delta\lambda_f = 2.0$) having a temperature dependence of the coupler $\delta\lambda_f/\delta T$ of about 11 ppm/°C and a broader filter ($\Delta\lambda_f = 5.0$) having a temperature dependence of the coupler $\delta\lambda_f/\delta T$ of about 88 ppm/°C. In the theoretical calculations whose results are summarized in Tables 1 and 2, various assumptions were made which do not limit the scope of the findings. Namely, the emission spectrum of the source is considered to be a Gaussian. Furthermore, the coupler function is approximated by a $\sin^2$ function, a hypothesis confirmed by both theoretical models and experimental data. The filter function of the coupler is also assumed not to comprise any sidebands. A filter having a function which satisfies these assumptions can be readily achieved by concatenating appropriate fiber couplers. Alternatively, suppression of sidebands can be obtained using a bulk optic filter. Although such a bulk optic filter has a large temperature dependence (typically in the order of 100 ppm or more per °C), its effect is small as the bulk filter edges are selected to fall near zeroes of the coupler filter function. A shift of the bulk optic filter function thus has little effect on the resulting filter transmission.

The results shown in Tables 1 and 2 clearly indicate a net improvement in the temperature dependence of the source when the source signal is preliminarily coupled by means of a multiplexing coupler. The net effect of the filter is therefore to reduce variations in the average spectrum wavelength caused by temperature by a factor of about 50 dB. The improvement in the temperature dependence of the laser signal is also appreciable in the case of a coupler having a larger temperature dependence (Table 2) and is also in the order of 50 dB.

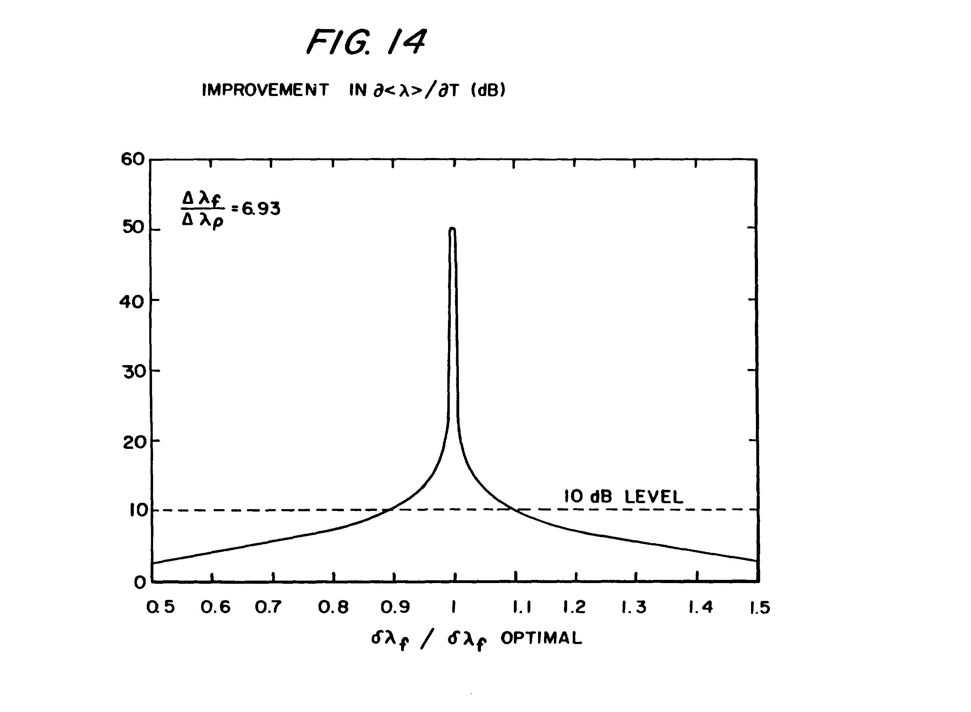

In the theoretical calculations described hereabove, the value $\delta\lambda_f$ is calculated to minimize the average spectrum wavelength $<\lambda>$ for a given specific temperature change. The net improvement in the temperature dependence of the source signal thus depends on the value chosen for $\delta\lambda_f$. Further calculations show that the improvement is reduced when $\delta\lambda_f$ is not exactly set at its optimal value. Reference is now made to Figure 14 which is a diagram showing how the improvement varies with respect to the value selected for $\delta\lambda_f$. The ratio $\delta\lambda_f/\delta\lambda_f$ (optimal) is represented on the abscissa axis whereas the improvement $\delta<\lambda>/\delta T$ in dB is represented on the ordinate axis. The person skilled in the art will recognize that the improvement of the temperature dependence of the source remains substantial (greater than 10 dB) as long as the value of $\delta\lambda_f$ is selected within 10% of its optimal value. By using a coupler in the device of the present invention and adequately selecting the temperature dependence of the coupler within 10% of its optimal value, it is possible to reduce the temperature dependence of the fiber source from a value of 10-20 ppm/°C to 1-2 ppm/°C or better. The above theoretical calculations have assumed that the temperature dependence of the coupler is linear. Taking into account the nonlinearity of couplers and assuming that the combined effects due to the selection of $\delta\lambda_f/\delta T$ and the nonlinearity of $\lambda_f(T)$ bring the value $\delta\lambda_f$ within only 30% of the original value of $\delta\lambda_{f(optimal)}$, Figure 14 clearly shows that an improvement of a factor of 3 can still be obtained with the device of the present invention. The improvement in the temperature dependence of the source can be obtained in most of the relevant optical applications of the present invention, and in particular in gyroscopes.

The filtering effect of the coupler can be enhanced in the embodiments described hereabove insofar as at least one component of the source signal traverses the coupler twice. In such a case, the intensity of the filtered light is equal to the product of the intensity of the unfiltered light emitted by the source and by the square of the filter coefficient for a given wavelength. This is best summarized in the equation:

$$P_{filtered(\lambda)} = P_{source(\lambda)} \cdot P^2_{coupler(\lambda)} \tag{4}$$

The device of the present invention is thus extremely advantageous over the prior art as it circumvents many limitations well recognized in the art. By properly selecting a coupler such that its temperature dependence varies in the opposite direction of the source spectrum, it is possible to effectively reduce the average wavelength temperature-induced shift of the source spectrum. A net improvement as high as 50 dB can be obtained if the temperature dependence of the coupler is properly selected. The improvement in the temperature dependence of the source remains however substantial (on the order of 10 dB) if the value of $\delta\lambda_f/\delta T$ is selected within 10% of its optimal value. The gain is still appreciable (about 3) when the values of $\delta\lambda_f/\delta T$ is selected within 30% of its optimal value. The value of $\delta\lambda_f/\delta T$ is fully compatible with optical couplers presently known.

It should also be noted that the above results remain valid when extended to other sources than superfluorescence fiber sources. In particular, the temperature dependence of the output of a resonant broadband fiber laser can also be dramatically reduced using a multiplexing coupler and appropriately selecting the value of $\delta\lambda_f/\delta T$. It should be understood that the above results are applicable to narrower band fiber laser sources as well.

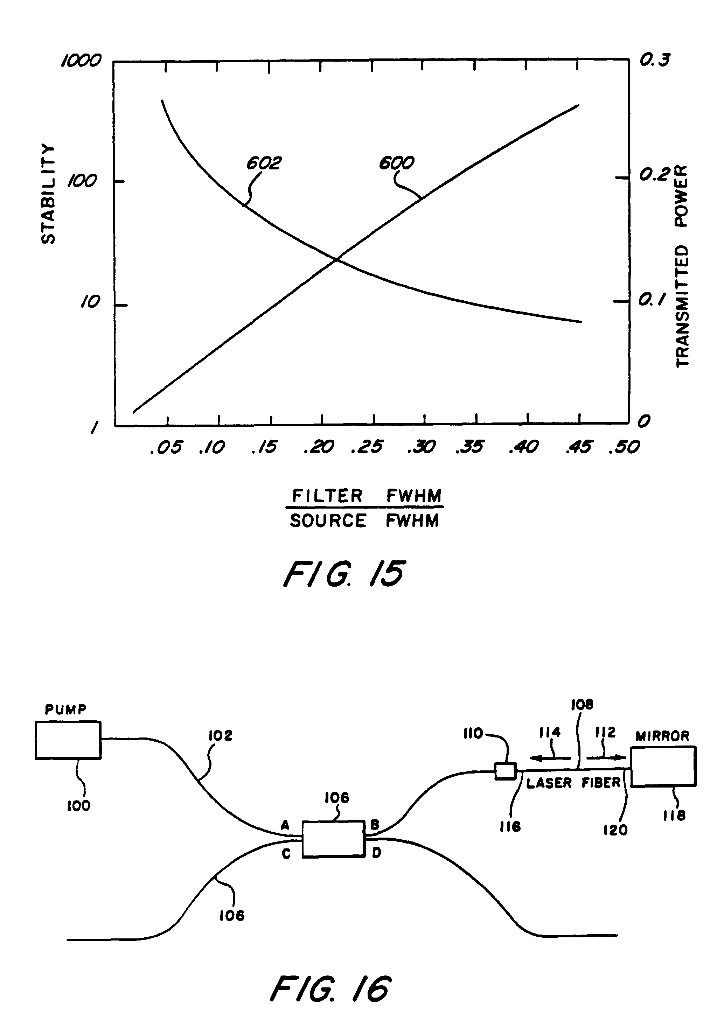

Reference is now made to Figure 15 which illustrates the dependence of the stability and of the transmitted power with respect to the ratio of the filter FWHM over the source FWHM. In this graph, the abscissa is represented by this ratio. On the leftmost ordinate axis, the stability of the superfluorescent output signal is represented whereas the rightmost axis shows the transmitted output power of the superfluorescent signal. For a better understanding of the criteria involved in selecting the filter, the filter whose characteristics are plotted in Figure 15 is assumed to be infinitely stable with respect to temperature. The increase of output signal stability is by definition the mean wavelength stability for a fixed stable filter function (e.g., a $\cos^2$ function), over an unstable source (e.g., a Lorentzian source). The stability curve 600 clearly indicates that the stability of the output signal increases when the filter FWHM decreases for a given source FWHM. The output spectrum filtered by a narrower filter (small FWHM) is, therefore, less temperature dependent than the output spectrum filtered by a broader filter (large FWHM). However, the tradeoff for this increase of stability for narrow filtering functions is that less power is transmitted through the coupler, as designed by curve 602. The person skilled in the art will indeed recognize that the narrower a filtering function is, the less wavelengths are transmitted and, therefore, the less power is delivered through the coupler.

By properly selecting the coupler parameters, it is therefore possible to obtain a coupler filter function which considerably reduces the temperature dependence of the source spectrum. This filter function is however sufficiently transmissive so that the intensity of the output light is sufficiently high for the various applications in which this light is to be used. The value of 0.20 for the ratio filter FWHM over source FWHM seems to optimize the above requirements as indicated on the graph. This value corresponds to the intersection point of the two curves 600 and 602.

The configuration of optical elements described in connection with the preferred embodiments of the present invention is thus extremely advantageous insofar as the output light emitted by the superfluorescent source of the present invention is made less temperature dependent than the light of any superfluorescent source of the prior art.

The gain which can be achieved in the superfluorescent source of the present invention using an Nd doped fiber is dependent upon the density of the inverted neodymium ion population within the Nd doped fiber. Theoretical calculations of the gain signal indicate that the gain factor can be quite large, in the order of 15 dB for a single pass. A gain of 15 dB implies that a signal propagating along the laser rod undergoes an amplification by a factor of approximately 31.6.

Referring now to Figures 3 and 12 again, the amplification of the forward signal 114 clearly differs from the amplification of the backward signal 112. The forward signal 114 is emitted towards the output of the doped fiber rod 108 (rightmost doped fiber end 120) and undergoes an amplification by a factor of g. The forward signal has therefore a power $P^+$ at the output of doped fiber which can be expressed by the following equation:

$$P^+ = P_o \, [e^g - 1] \tag{5}$$

where $P_o$ is the initial power of the signal launched into the doped fiber 108, g is the total gain and the factor 1 accounts for the loss of power required to induce superfluorescence.

The backward signal 112 undergoes amplification twice, firstly as it exits the doped fiber 108 towards the coupler 104 or 304 and secondly as it re-traverses the doped fiber 108 to be finally output. Simple theoretical calculations show that the power $P^-$ of the backward signal 114 at the output is:

$$P^- = P_o \, (e^{2g} - 1) \tag{6}$$

The reflection on the reflector 118 thus allows the amplification of the backward signal 112 to be far superior than the amplification of the forward signal 114. The forward signal 112 merely accounts for a small fraction of the total output. However, it is recalled that the filter function of the coupler does not apply to the forward signal 114. The forward signal 114, indeed, immediately exits the doped fiber without being filtered by any optical means. If the gain g is sufficiently large, the forward signal 114 is a negligible fraction of the output and therefore the temperature dependence of the unfiltered forward signal 114 does not have a substantial effect on the total output signal.

In the event the gain is reduced, the forward signal contribution is significant and, as a result, the temperature dependence of the unfiltered forward signal 114 may influence the temperature function of the total output signal.

To circumvent this difficulty, another embodiment of the present invention has been envisaged wherein both the forward signal and the backward signal are filtered by the coupler.

<u>Description of Third and Fourth Embodiments</u>

Figure 16 illustrates a schematic representation of the third embodiment according to the present invention. The same optical components as described in conjunction with Figures 3 and 12 illustrating the first and second embodiments are utilized in this third embodiment. The system therefore comprises a pump source 100, two optical fibers 102 and 106, a doped fiber 108, a mirror 118 and a coupler 104. The mirror 118, however, is placed at one end 120 of the doped fiber 108, whereas the other end 116 of the fiber is coupled to the optical fiber 102, preferably by means of a splice 110, and further coupled to the coupler 104.

The overall system in the third embodiment thus functions in the following manner. The pump source signal is emitted by the pump source 100 and transmitted to the optical fiber 102 as the coupler 104 has been selected not to couple signals at the source wavelength. The doped fiber 108 superfluorescence in the conditions described hereabove and yields two components, a forward signal 114 and a backward signal 112 as indicated by the arrows in Figure 16. The forward signal 114 (directed towards the left-hand side of the drawing) traverses the coupler 104 and is coupled to the optical fiber 106 as the coupler 104 is selected to 100% couple signals at the laser frequency. The output signal is collected on the optical fiber 106.

The backward signal 112 is reflected by the mirror 118 and output to the optical fiber 106 in the same way as the forward signal 114. It will, however, be recognized that both the forward and the backward signals are filtered once by the coupler. The filter function of the coupler can thereby decrease the temperature dependence of the total output signal for the reasons explained hereabove. Therefore, improved temperature stability results from the arrangement illustrated in Figure 16. It is apparent that the net filter function of the output signal in the third embodiment of the present invention is different from the filter function in the first two embodiments illustrated in Figures 3 and 12. The total output signal in the system of Figure 16 is indeed filtered once, whereas in the first and second embodiments, the backward component solely is filtered twice and the forward component remains unfiltered. All the advantages described in connection with the first two embodiments still apply to this third embodiment.

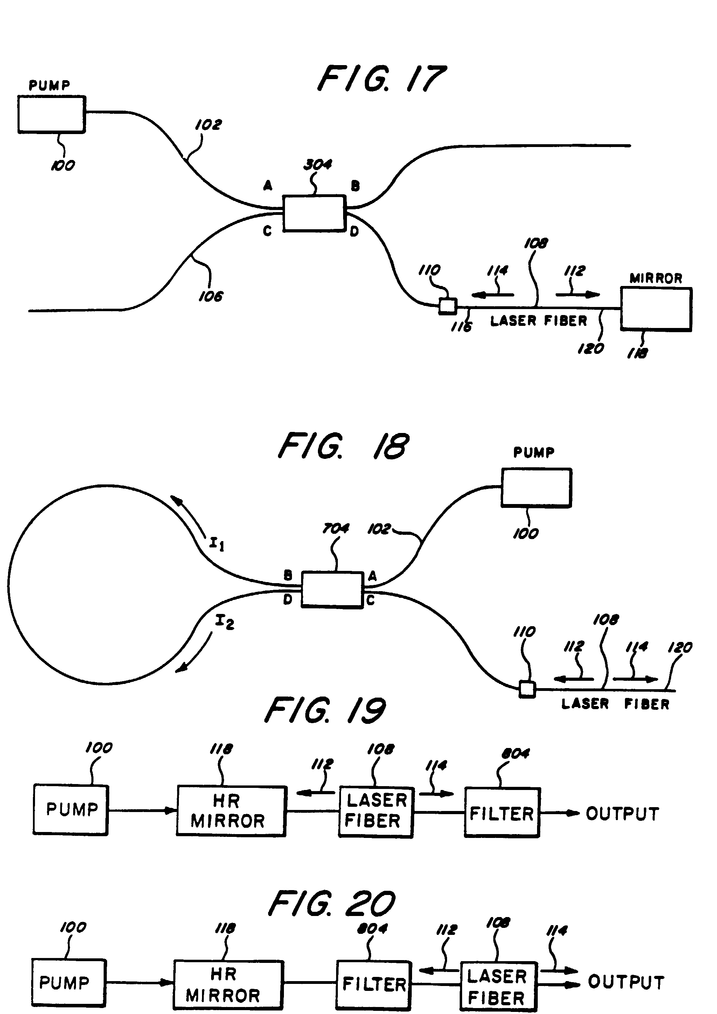

Another embodiment corresponding to the coupling arrangement described in conjunction with Figure 12 is also envisionable. In this fourth embodiment, illustrated in Figure 17, the properties of the coupler 304 are selected so that the coupler totally couples the pump source signal wavelength and essentially does not couple the laser signal wavelength. The doped fiber 108 and the mirror 118 are therefore coupled to the port D of the coupler 304. The pump signal is totally coupled to the doped fiber 108 via the coupler 304. The forward and backward components of the emitted laser signal are essentially uncoupled and transmitted to the optical fiber 106. All the advantages inherent to the previous embodiments are still valid (temperature dependence in particular).

## Description of the Fifth Embodiment

A fifth embodiment using an all-fiber reflector incorporating a gyroscope-like loop of fiber can also be envisioned. All-fiber reflectors are known in the art. In particular, a $Nd^{3+}$ doped cw fiber laser using all-fiber reflectors is disclosed in an article by J. D. Miller, et al., entitled "A $Nd^{3+}$-doped cw fiber laser using all-fiber reflectors," Applied Optics, Vol. 26, No. 11, pp. 2197-2201, June 1, 1987. Fiber reflectors are produced by looping back the outputs of a directional coupler. A passive all-fiber mirror has properties different from those of a typical dielectric or metal reflector. Light incident on the coupler is divided so that two portions of the field travel around the coupler in opposite directions. Light which couples across the coupler undergoes a $\pi/2$ phase lag.

In order to get a full understanding of the advantages presented by an all-fiber reflector, reference is made to Figure 18 which is a schematic representation of an all-fiber mirror. The elements described in connection with Figures 3 and 12 are designated by the same numerals. In this reflector, a fiber 102, preferably a single-mode fiber, is used and looped back between two adjacent ports of a coupler 704. The coupler 704 is preferably a fused coupler. An input signal is injected from a source 100 into one port of the coupler 704. One component $I_1$, of the input signal does not cross the coupler 704 and circulates the loop counterclockwise. The other component $I_2$ circulates the loop counterclockwise with two cross-traverses of the coupler 704. These two components $I_1$ and $I_2$ are then output to form an output signal in a doped fiber 108 and a return signal in the fiber 102. Simple theoretical calculations show that the ratio t of output to input fields $E_{out}/E_{in}$ is given by the following equation:

$$t = (1 - 2K)(1 - \eta) \exp[(-\alpha + j\beta)l] \tag{7}$$

wherein:

K is the intensity coupling ratio of the coupler;
$\eta$ is the intensity coupler loss;
$\alpha$ is the field loss;
$\beta$ is the propagation constant;
l is the total length of the loop; and
j is the complex number base.

The reflected signal consists of the superposition of two contradirectional components, each of which experiences one coupler traverse during the circuit. The ratio of output to input fields for the reflected signal is given by:

$$jr = (E_{out}/E_{in}) = 2j\,K^{1/2}\,(1-K)^{1/2}(1-\eta)\exp[(-\alpha+j\beta)l] \tag{8}$$

A person skilled in the art will recognize that t is a real number whereas jr is an imaginary number. There is therefore a $\pi/2$ phase change on reflection. On transmission however, there is a zero phase change if $K < 0.5$ and a $\pi$ phase change if $K > 0.5$. The maximum reflectivity is given where $dR/dK = 0$ which is satisfied for all fiber and coupler loss values when $K = 1/2$.

Referring again to Figure 18, which schematically represents the fifth embodiment of the present invention, a pump source 100 is coupled to the fiber 102 of the coupler 704 to provide pumping illumination at port A of the multiplexing coupler 704. The optical fiber 102 at ports B and D is looped back in the manner described hereabove so as to form an all-fiber reflector.

The fiber 102 at port C is coupled, e.g., butt-jointed or splice-fused, to a doped fiber 108 such as the one used in the previous embodiments. Preferably, the doped fiber 108 is a neodymium glass fiber (NGF). The geometrical parameters of the coupler are further selected so that the coupling ratio is 0.5 at the center wavelength of the doped fiber emission (corresponding to a coupling ratio of 3 dB) and so that the coupling ratio is 0 for the wavelength pump. The pump signal is therefore fully transmitted by the loop and fully coupled to the doped fiber. The coupler is, however, selected so that the laser signal is reflected with the maximum reflectivity (K = 0.5). The reflected laser signal thus undergoes a $\pi/2$ phase change as shown in the above theoretical calculation regarding all-fiber reflectors. The reflection R of the all-fiber reflector is given by the equation:

$$R = 4K (1-K) (1-\eta)^2 \exp (-2\alpha l) \tag{9}$$

whereas the transmission T is given by:

$$T = (1-2K)^2 (1-\eta^2) \exp (-2\alpha l) \tag{10}$$

If K = 1/2, Equations (1) and (2) yield:

$$R = (1-\eta)^2 \exp (-2\alpha l) \tag{11}$$

$$T = 0 \tag{12}$$

Two results can be inferred from Equations (11) and (12). An all-fiber reflector with low losses can give close to complete reflection. The reflected laser signal is therefore circulated along the doped fiber and undergoes the filter effect of the multiplexing coupler, thereby resulting in better temperature stability. There is also reduced feedback on the signal path as the laser signal is not transmitted back to the pump (T = 0).

In this embodiment, only the backward signal is filtered by the multiplexing coupler similarly to the first and second embodiments. However, it is apparent that if the gain is sufficiently large, the output signal is comprised almost entirely of the backward signal. It is also clear that all the advantages described in connection with the previous embodiments also apply in the case of an all-fiber reflector. This fifth embodiment does not utilize a dielectric mirror and has all the advantages of an all-fiber optical system.

Description of Sixth and Seventh Embodiments

In the previous embodiments, one of the important features of the present invention resides in the filter function performed by the multiplexing coupler. Such filter function allows a greater temperature stability. It is possible to replace the multiplexing coupler used in the previous embodiments with an optical filter whose parameters have been properly selected with regard to transmission at particular wavelengths. Reference is now made to Figures 19 and 20 which represent in a schematic way, in the form of a block diagram, the two further embodiments according to the present invention.

In Figures 19 and 20, four blocks are represented, illustrating respectively a pump 100, a high reflectance mirror 118, a doped fiber 108 and a filter 804 having a selected temperature dependence. The system illustrated in Figure 19 operates in the following manner. A pump source 100 emits a light signal illuminating a mirror 118. The mirror 118 is chosen to be transparent to the pump source wavelength. The mirror 118 is further coupled to a doped fiber 108. The transmitted pump signal illuminates the fiber 108, preferably an Nd:glass fiber (NGF), and produces superfluorescence if adequate pumping conditions are met. The laser signal has two components, a forward component 114 which is output at one end of the doped fiber 108 and a backward component 112. The mirror 118 is made reflective for the backward component wavelength and the backward component 112 is reflected back towards the output end of the doped fiber 108. The output laser signal is subsequently filtered by the filter 804 so that it becomes less temperature sensitive. In accordance with the aforementioned discussion of optical coupler temperature dependence, the temperature dependence of the filter is selected such that a signal emitted by the fiber source and filtered by the filter has a lower temperature dependence than an unfiltered laser signal.

In the embodiment illustrated in Figure 20, the filter 804 is positioned between the mirror 118 and the doped fiber 108. Thus, the backward component 112 only is filtered by the filter 804. The backward component 112 traverses the filter 804 twice, the first time en route towards the mirror 118 and the second time on its way back to the output end of the doped fiber 108. This embodiment is particularly advantageous if the gain of the doped fiber is sufficiently high.

A variety of filters can be used in the embodiments illustrated in Figures 19 and 20. As indicated in the disclosure of the previous embodiments, a multiplexing coupler is well suited to act as a filter. However, any filter susceptible to decrease the temperature dependence of the superfluorescent output signal would be adequate.

Furthermore, it will be recognized by the person skilled in the art that the above-configuration illustrated in Figures 19 and 20 can be extended to any doped fiber source, whether non-resonant as disclosed in the preferred embodiments of the present invention (absence of mirrors on both sides of the fiber) or resonant (typical doped fiber provided with mirrors on both ends). In the embodiments illustrated in Figures 19 and 20, a second mirror (not shown) may be placed at the second end of the doped fiber 108, thereby inducing resonance in the fiber 108. The output signal emitted by the fiber source is subsequently filtered by the filter 804, which allows a dramatic reduction of the temperature dependence of the output signal. It will be understood by those skilled in the art that the superfluorescent nature of the output signal emitted by the fiber source does not play a role in the filtering effect produced by the filter, and thus the concepts discussed herein are broadly applicable to other types of light signals. Furthermore, the emission spectrum of the fiber source can have a broad bandwidth as in the preferred embodiments of the present invention or have a narrower bandwidth. Finally, the preferred embodiments of the present invention have been described using polished optical fiber couplers. It will also be understood that other types of couplers of the state of the art can be used such as integrated optics couplers, biconical-taper fused couplers, etc.

Whereas the present invention has been described with respect to specific embodiments thereof, it will be understood that various changes and modifications will be suggested to one skilled in the art and it is intended to encompass such changes and modifications as fall within the scope of the appended claims.

## Claims

1. A fiber optic system, comprising:

   a pump source (100) for emitting pumping light at a first spectrum of wavelengths;
   an optical fiber (108) doped with a laser material, the intensity of said pumping light at said first spectrum of wavelengths being sufficient to induce superfluorescent emission of laser light in said laser material at a second spectrum of wavelengths, said laser light comprising a forward signal (114) and a backward signal (112) which are substantially contradirectional at locations where said laser light is emitted,

   characterised by

   a multiplexing coupler (104) for directing light emitted from said pump source (100) at said first spectrum of wavelengths into one end of said doped optical fiber (108), the intensity of said pumping light being sufficient for inducing emission of superfluorescent light at said second spectrum of wavelengths in said laser material, said multiplexing coupler (104) having a different coupling efficiency for said first spectrum of wavelengths than for said second spectrum of wavelengths;
   a reflector (118) coupled to said multiplexing coupler (104) so as to reflect at least one of said forward signal (114) and backward signal (112), into and through said multiplexing coupler (104); and said multiplexing coupler (104) having a selected low temperature dependence so as to cancel the temperature drift of the emission spectrum so that the laser light filtered by said multiplexing coupler (104) is less temperature dependent than unfiltered laser light.

2. A fiber optic system as defined in Claim 1, wherein said multiplexing coupler (104) provides substantially full coupling of said pumping light at said first spectrum of wavelengths and substantially inhibits coupling of said laser light at said second spectrum of wavelengths.

3. A fiber optic system as defined in Claim 1, wherein said multiplexing coupler (104) provides substantially full coupling of said laser light at said second spectrum of wavelengths and substantially inhibits coupling of said pumping light at said first spectrum of wavelengths.

4. A fiber optic system as defined in Claim 1, wherein said multiplexing coupler (104) provides substantially 50% coupling of said laser light at said second spectrum of wavelengths and substantially inhibits coupling of said pumping light at said first spectrum of wavelengths.

5. A fiber optic system as defined in Claim 1, wherein said reflector (118) is coupled to a second end of said doped optical fiber (108), said laser light exiting said doped fiber (108) via said first end of said doped fiber (108).

6. A fiber optic system as defined in Claim 1, wherein said laser light exits said doped fiber (108) via said multiplexing coupler (104) at another port of said coupler (104).

7. A fiber optic system as defined in Claim 1, wherein said multiplexing coupler (104) has a third and a fourth port and wherein said reflector (118) comprises an optical fiber forming a loop between said third and fourth ports.

8. The fiber optic system as defined in any one of the preceding claims, wherein said doped optical fiber (108) is a single-mode fiber doped with said laser material.

9. The fiber optic system as defined in any one of the preceding claims, wherein said coupling of light in said multiplexing coupler (104) is due to evanescent field coupling.

10. The fiber optic system as defined in any one of the preceding claims, wherein said first spectrum of wavelengths essentially comprises the wavelength at 806 nm.

11. The fiber optic system as defined in any one of the preceding claims, wherein said second spectrum of wavelengths essentially comprises the wavelength at 1060 nm.

12. The fiber optic system as defined in any one of the preceding claims, wherein said laser material comprises a rare earth ion and said doped optical fiber (108) is made of a host glass selected from the group essentially consisting of alkali, alkaline earth silicates, silicates, germinates, phosphates or borate glasses.

13. The fiber optic system as defined in Claim 12, wherein said rare earth material is neodymium, ytterbium or erbium.

14. The fiber optic system as defined in any one of the preceding claims, wherein said doped optical fiber (108) is fused or spliced to an optical fiber for coupling with said second port of said multiplexing coupler (104).

15. The fiber optic system as defined in Claim 1, wherein said reflector (118) comprises a dielectric mirror.

16. The fiber optic system as defined in Claim 1, wherein said reflector (118) comprises a metallic mirror.

17. The fiber optic system as defined in any one of the preceding claims, wherein said source (100) is a laser diode.

18. The fiber optic system as defined in any one of the preceding claims, wherein said source (100) is a dye laser.

19. A fiber optic system as defined in any one of the preceding claims, wherein said light emitted at said second spectrum of frequencies has a broad bandwidth.

20. A fiber optic system as defined in Claim 1, wherein said multiplexing coupler (104) includes a first and a second length of optical fiber juxtaposed to provide coupling of light between said first and second lengths, each of said first and second lengths of optical fiber having a first end portion and a second end portion, said pump source (100) being coupled to said first end portion of said first length of optical fiber, said first and second lengths of optical fiber forming a single, continuous strand of optical fiber, said optical fiber strand forming a loop portion and two line portions respectively connected to said pump source (100) and said doped optical fiber (108).

21. A fiber optic system, comprising:

a pump source (100) for emitting pumping light at a first spectrum of wavelengths;
an optical fiber (108) doped with laser material, the intensity of said pumping light being sufficient to induce emission of superfluorescent laser light in said laser material at a second spectrum of wavelengths when said laser material is pumped with said pumping light, said laser light having at least a forward signal (114) and a backward signal (112); and a reflector (118) for reflecting at least one of said first and second components of said laser light, characterised by
an optical filter (804) for filtering at least one of said forward and backward signals (114, 112), said filter (804) having a selected low temperature dependence so as to cancel the temperature drift of the emission spectrum so that the laser light filtered by said optical filter (804) is less temperature dependent than unfiltered laser light.

22. A fiber optic system as defined in Claim 21, wherein said reflector (118) is interposed between said pump source (100) and said doped optical fiber (108), said reflector (118) selectively transmitting said pumping light at said first spectrum of wavelengths and reflecting said laser light at said second spectrum of wavelengths.

23. A fiber optic system as defined in Claim 21, wherein said doped optical fiber (108) is interposed between said reflector (118) and said optical filter (804).

24. A fiber optic system as defined in Claim 21, wherein said optical filter (804) is interposed between said reflector (118) and said doped optical fiber (108).

25. A fiber optic system as defined in Claim 21, further comprising a second reflector (118) for forming a resonant cavity within said doped optical fiber (108).

26. A fiber optic system as defined in Claim 21, wherein said laser light has a broad bandwidth.

27. A fiber optic system as defined in Claim 21, wherein said laser light has a narrow bandwidth.

28. A method of producing light having low temporal coherence, comprising the steps of:

providing a source (100) of pumping illumination at a first spectrum of wavelengths;
pumping an optical fiber (108) doped with laser material with said pumping illumination so as to produce emission of superfluorescent light in said laser material at a second spectrum of wavelengths, said superfluorescent light having at least a forwrd signal (114) and a backward signal (112), characterised by the steps of:
multiplexing said pumping light and said superfluorescent light in an optical coupler (104) which is connected to said optical doped fiber (108) and said source (100) and which has a different coupling efficiency for said first spectrum of wavelengths from that for said second spectrum of wavelengths, reflecting at least one of the forward and backward signals into and through said optical coupler (104); selecting said optical coupler (104) having a low temperature dependence so as to cancel the temperature drift of the emission spectrum so that the laser light filtered by said optical coupler (104) is less temperature dependent than unfiltered laser light.

29. A method of producing light having low temporal coherence as defined in Claim 28, further comprising the step of directing said reflected component into said optical doped fiber (108).

30. A method of producing superfluorescent light having low temporal coherence and a low temperature dependence, comprising the steps of:

providing a source (100) of pumping illumination at a first spectrum of wavelengths;
pumping an optical fiber (108) doped with laser material with said pumping illumination so as to produce emission of laser light in said laser material at a second spectrum of wavelengths, said laser light having at least forward and backward components; and
reflecting at least one of said forward and backward components back into said doped optical fiber (108), characterised by the step of:
filtering at least one of said first and second components of said laser light using an optical filter (804) having a selected temperature dependence so as to cancel the temperature drift of the emission spectrum so that the filtered component has a lower temperature dependence than the unfiltered light.

31. A method of producing light having low temporal coherence as defined in Claim 30, wherein said pumping step comprises the step of inducing superfluorescence in said doped fiber (108).

32. A method of producing light having low temporal coherence as defined in Claim 30, wherein said filtering step comprises the steps of:

selecting an optical coupler (104) having a predetermined second temperature drift substantially equal and of opposite direction to said first temperature drift of said laser light; and
coupling at least one of said forward and backward components of said laser light using said optical coupler (104) so as to produce a coupled component having a third temperature drift, whereby said third temperature drift of said coupled component is substantially cancelled or minimised.

**Patentansprüche**

1. Faseroptiksystem mit:

   einer Pumpquelle (100) zum Emittieren von Pumplicht mit einem ersten Wellenlängenspektrum;
   einer mit Lasermaterial dotierten optischen Faser (108), wobei die Intensität des Pumplichts in dem ersten Wellenlängenspektrum ausreicht, um superfluoreszente Emission von Laserlicht in dem Lasermaterial bei einem zweiten Wellenlängenspektrum zu induzieren; und wobei das Laserlicht ein Vorwärtssignal (114) und ein Rückwärtssignal (112) aufweist, die an den Stellen, wo das Laserlicht emittiert wird, im wesentlichen einander entgegengerichtet sind,

   gekennzeichnet durch

   einen Multiplexkuppler (104) zum Leiten von durch die Pumpquelle (100) emittiertem Licht mit dem ersten Wellenlängenspektrum in ein Ende der dotierten Faser (108), wobei die Intensität dieses Pumplichtes ausreicht, um die Emission von superfluoreszentem Licht mit dem zweiten Wellenlängenspektrum in dem Lasermaterial zu induzieren, und wobei der Multiplexkuppler (104) für das erste Wellenlängenspektrum einen anderen Kupplungswirkungsgrad hat als für das zweite Wellenlängenspektrum;
   einen an den Multiplexkuppler (104) gekuppelten Reflektor (118), um das Vorwärtssignal (114) und/oder das Rückwärtssignal (112) in und durch den Multiplexkuppler (104) zu reflektieren; und
   eine für den Multiplexkuppler (104) gewählte niedrige Temperaturabhängigkeit, um die Temperaturverschiebung des Emissionsspektrums aufzuheben, so daß das von dem Multiplexkuppler (104) gefilterte Laserlicht weniger temperaturabhängig ist als das ungefilterte Laserlicht.

2. Faseroptiksystem nach Anspruch 1, bei dem der Multiplexkuppler (104) ein im wesentlichen vollständiges Kuppeln des Pumplichtes bei dem ersten Wellenlängenspektrum bewirkt und ein Kuppeln des Laserlichts bei dem zweiten Wellenlängenspektrum im wesentlichen hemmt.

3. Faseroptiksystem nach Anspruch 1, bei dem der Multiplexkuppler (104) ein im wesentlichen vollständiges Kuppeln des Laserlichtes bei dem zweiten Wellenlängenspektrum bewirkt und ein Kuppeln des Pumplichts bei dem ersten Wellenlängenspektrum im wesentlichen hemmt.

4. Faseroptiksystem nach Anspruch 1, bei dem der Multiplexkuppler (104) ein im wesentlichen 50%iges Kuppeln des Laserlichts bei dem zweiten Wellenlängenspektrum bewirkt und ein Kuppeln des Pumplichtes bei dem ersten Wellenlängenspektrum im wesentlichen hemmt.

5. Faseroptiksystem nach Anspruch 1, bei dem der Reflektor (118) an ein zweites Ende der dotierten optischen Faser (108) gekuppelt ist, wobei das Laserlicht aus der dotierten Faser (108) über das erste Ende der dotierten Faser (108) austritt.

6. Faseroptiksystem nach Anspruch 1, bei dem das Laserlicht aus der dotierten Faser (108) über den Multiplexkuppler (104) an einem anderen Anschluß des Kupplers (104) austritt.

7. Faseroptiksystem nach Anspruch 1, bei dem der Multiplexkuppler (104) einen dritten und einen vierten Anschluß hat und bei dem der Reflektor (118) eine optische Faser aufweist, die eine Schleife zwischen dem dritten und dem vierten Anschluß bildet.

8. Faseroptiksystem nach einem der vorherigen Ansprüche, bei dem die dotierten optische Faser (108) eine mit dem Lasermaterial dotierte Einfachmodus-Faser ist.

9. Faseroptiksystem nach einem der vorherigen Ansprüche, bei dem das Kuppeln von Licht in dem Multiplexkuppler (104) evaneszenter Feldkupplung unterliegt.

10. Faseroptiksystem nach einem der vorherigen Ansprüche, bei dem das erste Wellenlängenspektrum im wesentlichen die Wellenlänge bei 806 nm umfaßt.

11. Faseroptiksystem nach einem der vorherigen Ansprüche, bei dem das zweite Wellenlängenspektrum im wesentlichen die Wellenlänge bei 1060 nm umfaßt.

12. Faseroptiksystem nach einem der vorherigen Ansprüche, bei dem das Lasermaterial ein Ion der Seltenen Erden enthält und die dotierte optische Faser (108) aus einem Wirtsglas aus einer Gruppe besteht, die im wesentlichen Alkali, Erdalkalisilikate, Silikate, Keime, Phosphate oder Boratgläser enthält.

13. Faseroptiksystem nach Anspruch 12, bei dem das Material der seltenen Erde vorzugsweise Neodym, Ytterbium oder Erbium ist.

14. Faseroptiksystem nach einem der vorherigen Ansprüche, bei dem die dotierte optische Faser (108) an eine optische Faser angeschmolzen oder gespleißt ist, um sie mit dem zweiten Anschluß des Multiplexkupplers (104) zu kuppeln.

15. Faseroptiksystem nach Anspruch 1, bei dem der Reflektor (118) einen dielektrischen Spiegel aufweist.

16. Faseroptiksystem nach Anspruch 1, bei dem der Reflektor (118) einen metallischen Spiegel aufweist.

17. Faseroptiksystem nach einem der vorherigen Ansprüche, bei dem die Quelle (100) eine Laserdiode ist.

18. Faseroptiksystem nach einem der vorherigen Ansprüche, bei dem die Quelle (100) ein Farbstofflaser ist.

19. Faseroptiksystem nach einem der vorherigen Ansprüche, bei dem das mit dem zweiten Frequenzspektrum emittierte Licht eine große Bandbreite aufweist.

20. Faseroptiksystem nach Anspruch 1, bei dem der Multiplexkuppler (104) eine erste und eine zweite Länge einer optischen Faser nebeneinanderliegend aufweist, um ein Kuppeln von Licht zwischen der ersten und der zweiten Länge zu bewirken, wobei die erste und die zweite Länge der optischen Faser einen ersten Endteil und einen zweiten Endteil besitzen, die Pumpquelle (100) an den ersten Endteil der ersten Länge der optischen Faser gekuppelt ist, die erste und die zweite Länge der optischen Faser einen einfachen, durchgehenden Strang einer optischen Faser bilden, und der optische Faserstrang einen Schleifenbereich und zwei Linienbereiche bildet, die mit der Pumpquelle (100) bzw. der dotierten optischen Faser (108) verbunden sind.

21. Faseroptiksystem mit:

einer Pumpquelle (100) zum Emittieren von Pumplicht mit einem ersten Wellenlängenspektrum;
einer mit Lasermaterial dotierten optischen Faser (108), wobei die Intensität des Pumplichts ausreicht, um die Emission von superfluoreszentem Laserlicht in dem Lasermaterial bei einem zweiten Wellenlängenspektrum zu induzieren, wenn das Lasermaterial mit dem Pumplicht gepumpt wird, wobei der Laserlicht wenigstens ein Vorwärtssignal (114) und ein Rückwärtssignal (112) aufweist; und einem Reflektor (118) zum Reflektieren der ersten und/oder der zweiten Komponente des Laserlichts, gekennzeichnet durch
einen optischen Filter (804) zum Filtern des Vorwärtsund/oder des Rückwärtssignals (114, 112), wobei der Filter mit einer niedrigen Temperaturabhängigkeit ausgewählt ist, um die Temperaturverschiebung des Emissionsspektrums zu hemmen, so daß das von dem optischen Filter (804) gefilterte Laserlicht weniger temperaturabhängig ist als das ungefilterte Laserlicht.

22. Faseroptiksystem nach Anspruch 21, bei dem der Reflektor (118) zwischen die Pumpquelle (100) und die dotierte optische Faser (108) eingefügt ist, wobei der Reflektor (118) selektiv das Pumplicht in dem ersten Wellenlängenspektrum durchläßt und das Laserlicht in dem zweiten Wellenlängenspektrum reflektiert.

23. Faseroptiksystem nach Anspruch 21, bei dem die dotierte optische Faser (108) zwischen den Reflektor (118) und den optischen Filter (804) eingefügt ist.

24. Faseroptiksystem nach Anspruch 21, bei dem der optische Filter (804) zwischen den Reflektor (118) und die dotierte optische Faser (108) eingefügt ist.

25. Faseroptiksystem nach Anspruch 21, weiterhin mit einem zweiten Reflektor (118) zum Bilden eines Resonanzraums in der dotierten optischen Faser (108).

26. Faseroptiksystem nach Anspruch 21, bei dem das Laserlicht eine große Bandbreite aufweist.

**27.** Faseroptiksystem nach Anspruch 21, bei dem das Laserlicht eine enge Bandbreite aufweist.

**28.** Verfahren zum Erzeugen von Licht geringer zeitlicher Kohärenz, mit folgenden Schritten:

Vorsehen einer Quelle (100) zur Pumpbelichtung bei einem ersten Wellenlängenspektrum; Pumpen eines Endes einer mit Lasermaterial dotierten optischen Faser (108) mit der Pumpbelichtung, um eine Emission von superfluoreszentem Licht in dem Lasermaterial bei einem zweiten Wellenlängenspektrum zu erzeugen, wobei das superfluoreszente Licht wenigstens ein Vorwärtssignal (114) und ein Rückwärtssignal (112) aufweist, gekennzeichnet durch folgende Schritte: Multiplexen des Pumplichts und des superfluoreszenten Lichts in einem optischen Kuppler (104), der mit der dotierten optischen Faser (108) und der Quelle (100) verbunden ist und für das erste Wellenlängenspektrum und das zweite Wellenlängenspektrum einen unterschiedlichen Kupplungswirkungsgrad aufweist, und Reflektieren des Vorwärts-und/oder des Rückwärtssignals in und durch den optischen Kuppler (104); Auswählen des optischen Kupplers (104) mit einer niedrigen Temperaturabhängigkeit, um die Temperaturverschiebung des Emissionsspektrums aufzuheben, so daß das von dem optischen Kuppler (104) gefilterte Laserlicht weniger temperaturabhängig ist als das ungefilterte Laserlicht.

**29.** Verfahren zum Erzeugen von Licht geringer zeitlicher Kohärenz nach Anspruch 28, mit dem weiteren Schritt das Leitens der reflektierten Komponente in die dotierte optische Faser (108).

**30.** Verfahren zum Erzeugen von superfluoreszentem Licht mit geringer zeitlicher Kohärenz und geringer Temperaturabhängigkeit, mit folgenden Schritten:

Vorsehen einer Quelle (100) zur Pumpbelichtung bei einem ersten Wellenlängenspektrum; Pumpen einer mit Lasermaterial dotierten optischen Faser (108) mit der Pumpbelichtung, um eine Emission von Laserlicht in dem Lasermaterial bei einem zweiten Wellenlängenspektrum zu erzeugen, wobei das Laserlicht wenigsten eine Vorwärtskomponente und eine Rückwärtskomponente aufweist; und Reflektieren der Vorwärts- und/oder der Rückwärtskomponente in die dotierte optische Faser (108) zurück, gekennzeichnet durch folgende Schritte: Filtern der ersten und/oder der zweiten Komponente des Laserlichts mittels eines optischen Filters (804) mit einer ausgewählten Temperaturabhängigkeit, um die Temperaturverschiebung des Emissionsspektrums aufzuheben, so daß die gefilterte Komponente eine geringere Temperaturabhängigkeit aufweist als das ungefilterte Licht.

**31.** Verfahren zum Erzeugen von Licht geringer zeitlicher Kohärenz nach Anspruch 30, bei dem der Schritt des Pumpens den Schritt umfaßt, in der dotierten Faser (108) Superfluoreszenz zu induzieren.

**32.** Verfahren zum Erzeugen von Licht geringer zeitlicher Kohärenz nach Anspruch 30, bei dem der Schritt des Filterns folgende Schritte umfaßt:

Vorsehen eines optischen Kupplers (104) mit einer vorgegebenen zweiten Temperaturverschiebung, die mit der ersten Temperaturverschiebung des Laserlichts im wesentlichen gleich und dieser entgegengerichtet ist; und Kuppeln der Vorwärts- und/oder der Rückwärtskomponente des Laserlichts mittels des optischen Kupplers (104) zum Erzeugen einer gekuppelten Komponente mit einer dritten Temperaturverschiebung, wobei die dritte Temperaturverschiebung der gekuppelten Komponente im wesentlichen aufgehoben oder minimiert wird.

**Revendications**

**1.** Système à fibres optiques, comprenant :

une source de pompage (100) pour émettre une lumière de pompage à un premier spectre de longueurs d'ondes; une fibre optique (108) dopée avec une matière laser, l'intensité de ladite lumière de pompage audit premier spectre de longueurs d'ondes étant suffisante pour induire une émission superfluorescente de lumière laser dans ladite matière laser à un second spectre de longueurs d'ondes, ladite lumière laser comprenant un signal vers l'avant (114) et un signal vers l'arrière (112) qui sont sensiblement de directions opposées à des endroits où ladite lumière laser est émise,

caractérisé par

un coupleur de multiplexage (104) pour diriger de la lumière émise par ladite source de pompage (100) audit premier spectre de longueurs d'ondes dans une extrémité de ladite fibre optique dopée (108), l'intensité de ladite lumière de pompage étant suffisante pour induire une émission de lumière superfluorescente audit second spectre de longueurs d'ondes dans ladite matière laser, ledit coupleur de multiplexage (104) ayant un facteur de couplage différent pour ledit premier spectre de longueurs d'ondes que pour ledit second spectre de longueurs d'ondes;

un réflecteur (118) couplé audit coupleur de multiplexage (104) afin de réfléchir au moins un desdits signal vers l'avant (114) et signal vers l'arrière (112) dans et à travers ledit coupleur de multiplexage (104); et

ledit coupleur de multiplexage (104) ayant une faible dépendance en température sélectionnée pour annuler la dérive en température du spectre d'émission, de sorte que la lumière laser filtrée par ledit coupleur de multiplexage (104) est moins dépendante de la température que de la lumière laser non filtrée.

2. Système à fibres optiques tel que défini dans la revendication 1, dans lequel ledit coupleur de multiplexage (104) fournit un couplage sensiblement complet de ladite lumière de pompage audit premier spectre de longueurs d'ondes et empêche sensiblement un couplage de ladite lumière laser audit second spectre de longueurs d'ondes.

3. Système à fibres optiques tel que défini dans la revendication 1, dans lequel ledit coupleur de multiplexage (104) fournit un couplage sensiblement complet de ladite lumière laser audit second spectre de longueurs d'ondes et empêche sensiblement un couplage de ladite lumière de pompage audit premier spectre de longueurs d'ondes.

4. Système à fibres optiques comme défini dans la revendication 1, dans lequel ledit coupleur de multiplexage (104) fournit un couplage sensiblement égal à 50% de ladite lumière laser audit second spectre de longueurs d'ondes et empêche sensiblement un couplage de ladite lumière de pompage audit premier spectre de longueurs d'ondes.

5. Système à fibres optiques tel que défini dans la revendication 1, dans lequel ledit réflecteur (118) est couplé à une seconde extrémité de ladite fibre optique dopée (108), ladite lumière laser sortant de ladite fibre dopée (108) par ladite première extrémité de ladite fibre dopée (108),

6. Système à fibres optiques comme défini dans la revendication 1, dans lequel ladite lumière laser sort de ladite fibre dopée (108) par ledit coupleur de multiplexage (104) à une autre sortie dudit coupleur (104).

7. Système à fibres optiques tel que défini dans la revendication 1, dans lequel ledit coupleur de multiplexage (104) comporte une troisième et une quatrième sortie et dans lequel ledit réflecteur (118) comprend une fibre optique formant une boucle entre lesdits troisième et quatrième orifices.

8. Système à fibres optiques tel que défini dans l'une quelconque des revendications précédentes, dans lequel ladite fibre optique dopée (108) est une fibre monomode dopée avec ladite matière laser.

9. Système à fibres optiques tel que défini dans l'une quelconque des revendications précédentes, dans lequel ledit couplage de lumière dans ledit coupleur de multiplexage (104) est dû à un couplage à champ évanescent.

10. Système à fibres optiques tel que défini dans l'une quelconque des revendications précédentes, dans lequel ledit premier spectre de longueurs d'ondes comprend essentiellement la longueur d'onde de 806 nm.

11. Système à fibres optiques tel que défini dans l'une quelconque des revendications précédentes, dans lequel ledit second spectre de longueurs d'ondes comprend essentiellement la longueur d'onde de 1060 nm.

12. Système à fibres optiques tel que défini dans l'une quelconque des revendications précédentes, dans lequel ladite matière laser comprend un ion de terre rare et ladite fibre optique dopée (108) est formée par un verre hôte, sélectionné à partir du groupe comprenant essentiellement des verres contenant un alcali, des silicates alcalino-terreux, des silicates, des germinates, des phosphates ou des borates.

13. Système à fibres optiques tel que défini dans la revendication 12, dans lequel ladite terre rare est du néodyme, de l'ytterbium ou de l'erbium.

**14.** Système à fibres optiques tel que défini dans l'une quelconque des revendications précédentes, dans lequel ladite fibre optique dopée (108) est fondue ou épissée avec une fibre optique pour être couplée avec ladite seconde sortie dudit coupleur de multiplexage (104).

**15.** Système à fibres optiques tel que défini dans la revendication 1, dans lequel ledit réflecteur (118) comprend un miroir diélectrique.

**16.** Système à fibres optiques tel que défini dans la revendication 1, dans lequel ledit réflecteur (118) comprend un miroir métallique.

**17.** Système à fibres optiques tel que défini dans l'une quelconque des revendications précédentes, dans lequel ladite source (100) est une diode laser.

**18.** Système à fibres optiques tel que défini dans l'une quelconque des revendications précédentes, dans lequel ladite source (100) est un laser à colorant.

**19.** Système à fibres optiques tel que défini dans l'une quelconque des revendications précédentes, dans lequel ladite lumière émise audit second spectre de fréquences à une grande largeur de bande.

**20.** Système à fibres optiques tel que défini dans la revendication 1, dans lequel ledit coupleur de multiplexage (104) comprend une première et une seconde longueur de fibre optique juxtaposées pour fournir un couplage de lumière entre lesdites première et seconde longueurs, chacune desdites première et seconde longueurs de fibre optique comportant une première partie d'extrémité et une seconde partie d'extrémité, ladite source de pompage (100) étant couplée à ladite première partie d'extrémité de ladite première longueur de fibre optique, lesdites première et seconde longueurs de fibre optique formant un seul brin de fibre optique continu, ledit brin de fibre optique formant une partie de boucle et deux parties droites reliées respectivement à ladite source de pompage (100) et à ladite fibre optique dopée (108).

**21.** Système à fibres optiques comprenant :

une source de pompage (100) pour émettre une lumière de pompage à un premier spectre de longueurs d'ondes;
une fibre optique (108) dopée avec une matière laser, l'intensité de ladite lumière de pompage étant suffisante pour induire une émission superfluorescente de lumière laser dans ladite matière laser à un second spectre de longueurs d'ondes lorsque ladite matière laser est pompée avec ladite lumière de pompage, ladite lumière laser comprenant au moins un signal vers l'avant (114) et un signal vers l'arrière (112); et un réflecteur (118) pour réfléchir au moins une desdites première et seconde composantes de ladite lumière laser, caractérisé par un filtre optique (804) pour filtrer au moins un desdits signaux vers l'avant et vers l'arrière (114, 112), ledit filtre (804) ayant une faible dépendance en température sélectionnée pour annuler la dérive en température du spectre d'émission, de sorte que la lumière laser filtrée par ledit filtre optique (804) est moins dépendante de la température que de la lumière laser non filtrée.

**22.** Système à fibres optiques tel que défini dans la revendication 21, dans lequel ledit réflecteur (118) est intercalé entre ladite source de pompage (100) et ladite fibre optique dopée (108), ledit réflecteur (118) transmettant de façon sélective ladite lumière de pompage audit premier spectre de longueurs d'ondes et réfléchissant ladite lumière laser audit second spectre de longueurs d'ondes.

**23.** Système à fibres optiques tel que défini dans la revendication 21, dans lequel ladite fibre optique dopée (108) est intercalée entre ledit réflecteur (118) et ledit filtre optique (804).

**24.** Système à fibres optiques tel que défini dans la revendication 21, dans lequel ledit filtre optique (804) est intercalé entre ledit réflecteur (118) et ladite fibre optique dopée (108).

**25.** Système à fibres optiques tel que défini dans la revendication 21, comprenant en outre un second réflecteur (118) pour former une cavité résonante à l'intérieur de ladite fibre optique dopée (108).

**26.** Système à fibres optiques tel que défini dans la revendication 21, dans lequel ladite lumière laser a une grande largeur de bande.

**27.** Système à fibres optiques tel que défini dans la revendication 21, dans lequel ladite lumière laser a une largeur de bande étroite.

**28.** Procédé d'émission de lumière ayant une cohérence temporelle faible, comprenant les étapes consistant à :

fournir une source (100) d'illumination de pompage à un premier spectre de longueurs d'ondes;
pomper une extrémité d'une fibre optique (108) dopée avec une matière laser avec ledit illumination de pompage afin de produire une émission de lumière superfluorescente dans ladite matière laser à un second spectre de longueurs d'ondes, ladite lumière superfluorescente comportant au moins un signal vers l'avant (114) et un signal vers l'arrière (112), caractérisé par les étapes consistant à :
multiplexer ladite lumière de pompage et de ladite lumière superfluorescente dans un coupleur optique (104) qui est relié à ladite fibre optique dopée (108) et à ladite source (100) et qui a un facteur de couplage différent pour ledit premier spectre de longueurs d'ondes que pour ledit second spectre de longueurs d'ondes, réfléchissant au moins un des signaux vers l'avant et vers l'arrière dans et à travers ledit coupleur optique (104);
choisir ledit coupleur optique (104) ayant une faible dépendance en température pour annuler la dérive en température du spectre d'émission, de sorte que la lumière laser filtrée par ledit coupleur optique (104) est moins dépendante de la température que de la lumière laser non filtrée.

**29.** Procédé d'émission de lumière ayant une cohérence temporelle faible tel que défini dans la revendication 28, comprenant en outre l'étape consistant à diriger ladite composante réfléchie dans ladite fibre optique dopée (108).

**30.** Procédé d'émission de lumière superfluorescente ayant une cohérence temporelle faible et une faible dépendance en température, comprenant les étapes consistant à :

fournir une source (100) d'illumination de pompage à un premier spectre de longueurs d'ondes;
pomper une fibre optique (108) dopée avec une matière laser avec ladite illumination de pompage afin de produire une émission de lumière laser dans ladite matière laser à un second spectre de longueurs d'ondes, ladite lumière laser comportant au moins des composantes vers l'avant et vers l'arrière; et
réfléchir au moins une desdites composantes vers l'avant et vers l'arrière en retour dans ladite fibre optique dopée (108), caractérisé par les étapes consistant à :
filtrer au moins une desdites première et seconde composantes de ladite lumière laser en utilisant un filtre optique (804) ayant une dépendance en température sélectionnée pour annuler la dérive en température du spectre d'émission, de sorte que la composante filtrée a une dépendance en température plus faible que la lumière non filtrée.

**31.** Procédé d'émission de lumière ayant une cohérence temporelle faible tel que défini dans la revendication 30, dans lequel ladite étape de pompage comprend l'étape consistant à induire la superfluorescence dans ladite fibre dopée (108).

**32.** Procédé d'émission de lumière ayant une cohérence temporelle faible tel que défini dans la revendication 30, dans lequel ladite étape de filtrage comprend les étapes consistant à :

choisir un coupleur optique (104) ayant une seconde dérive en température prédéterminée sensiblement égale et de direction opposée à ladite première dérive en température de ladite lumière laser; et
coupler au moins une desdites composantes vers l'avant et vers l'arrière de ladite lumière laser en utilisant ledit coupleur optique (104) afin de produire une composante couplée ayant une troisième dérive en température, ladite troisième dérive en température de ladite composante couplée étant sensiblement annulée ou minimisée.

## FIG. 1a

PUMP BAND
DESIGNATED LEVEL ③

PUMP TRANSITIONS

$r_{32}$

$r_{31}$

UPPER LASING LEVEL ②

$r_{30}$ $r_{21}$

LASER TRANS.

$W_{03}$

LOWER LASING LEVEL ①

$r_{20}$ $r_{10}$

GROUND LEVEL ⓪

## FIG. 1b

$E_3$

$r_{32}$ (FAST)

$E_2$

$r_{21}$ (SLOW)

$E_1$

$r_{10}$ (FAST)

POPULATION DENSITY

## FIG. 2

OPTICAL DENSITY

$\lambda (\mu m)$

## FIG. 4

FIG. 3

FIG. 5

$h_0 = 4.0$ um
OFFSET = 0um
R = 25 cm

RESOLUTION: 170 NM    SIGNAL WAVELENGTH (MICRON)

FIG. 6

$h_0 = 4.0$ um
OFFSET = 0um
R = 200 cm

RESOULUTION: 60NM    SIGNAL WAVELENGTH (MICRON)

29

FIG. 7

FIG. 8

FIG. 9

FIG. 10

FIG. 11a

FIG. 11b

FIG. 11c

FIG. 12

FIG. 13b

FIG. 13a

# FIG. 14

IMPROVEMENT IN $\partial<\lambda>/\partial T$ (dB)

$\dfrac{\Delta \lambda_f}{\Delta \lambda_\rho} = 6.93$

10 dB LEVEL

$\delta\lambda_f / \delta\lambda_f$ OPTIMAL

EP 0 372 907 B1

33

FIG. 15

FIG. 16

## FIG. 17

PUMP

304

A    B

C    D

102

100

106

108

110

114

112

116

LASER FIBER

120

MIRROR

118

## FIG. 18

PUMP

704    102

100

$I_1$

$I_2$

B    A

D    C

110

108

112    114    120

LASER FIBER

## FIG. 19

PUMP
100

HR MIRROR
118

112

LASER FIBER
108

114

FILTER
804

→ OUTPUT

## FIG. 20

PUMP
100

HR MIRROR
118

FILTER
804

112

LASER FIBER
108

114

→ OUTPUT